# EUROPÄISCHE PATENTSCHRIFT

(11) **EP 2 467 635 B1**
(45) Veröffentlichungstag und Bekanntmachung des Hinweises auf die Patenterteilung: **16.11.2016**
(21) Anmeldenummer: 10754291.2
(22) Anmeldetag: 20.08.2010
(51) Int. Cl.: F21S 8/00, F21V 13/14, F21V 5/04, F21W 131/406, F21Y 115/10

(54) **LED-LEUCHTE, INSBESONDERE LED-SCHEINWERFER**
LED LUMINAIRE, PARTICULARLY LED HEADLIGHT
LAMPE À LED, EN PARTICULIER PHARE À LED

(30) Priorität: 20.08.2009 DE 202009011500 U
(43) Veröffentlichungstag der Anmeldung: 27.06.2012
(73) Patentinhaber: Arnold&Richter Cine Technik GmbH&Co. Betriebs KG, 80799 München (DE)
(72) Erfinder: MELZNER, Erwin, 83112 Frasdorf (DE); JONISCHKEIT, Michael, 85567 Alxing (DE)
(74) Vertreter: Maikowski & Ninnemann Patentanwälte Partnerschaft mbB
(86) Internationale Anmeldenummer: PCT/EP2010/062200
(87) Internationale Veröffentlichungsnummer: WO 2011/020920

(56) Entgegenhaltungen:
- WO-A1-00/36336
- WO-A1-2007/069181
- DE-A1-102005 044 237
- US-A1- 2007 147 041

## Beschreibung

Die Erfindung betrifft eine LED-Leuchte, insbesondere einen LED-Scheinwerfer, gemäß dem Oberbegriff der Ansprüche 1 und 2.

Eine solche LED-Leuchte ist aus der WO 2007/069181 bekannt.

Aus der DE 100 63 134 A1 ist ein Scheinwerfer bekannt, der zur Erzielung einer hohen Lichtausbeute und einer gleichmäßigen Lichtverteilung einen gekrümmten Reflektor, eine innerhalb des Hohlraums des gekrümmten Reflektors angeordnete Lampe, eine in Abstrahlrichtung vor dem Reflektor angeordnete Sammellinse und eine zwischen dem Reflektor und der Sammellinse angeordnete Zerstreuungslinse aufweist. Zur Fokussierung des vom Scheinwerfer abgestrahlten Lichts ist der Reflektor mit der Lampe oder die Zerstreuungslinse in Richtung der optischen Hauptachse des Scheinwerfers bewegbar.

Aus der EP 1 241 399 B1 ist ein optisches System für einen Stufenlinsenscheinwerfer bekannt, das für einen verbesserten Lichtwirkungsgrad sowohl in einer Spotstellung als auch in einer Floodstellung der Lichtverteilung bei Erhaltung der Gleichmäßigkeit der Beleuchtungsstärke im Lichtfeld einen ellipsoiden Reflektor, eine Lampe und mindestens eine Stufenlinse aufweist, deren Oberfläche oder die Licht reflektierende Oberfläche des Reflektors strukturiert ist. Nach Maßgabe des einzustellenden Öffnungswinkels des aus dem Scheinwerfer austretenden Lichtbündels ist der Abstand der Lampe und der Stufenlinse zum Reflektor zwangsgekoppelt einstellbar.

Aus der PCT/EP 2008/060892 ist ein LED-Scheinwerfer mit einer Lichterzeugungseinheit oder "Light Engine" aus mehreren Leuchtdioden oder LEDs bekannt, die auf einer gut wärmeleitend mit einem Kühlkörper verbunden Platine angeordnet sind. An die Lichterzeugungseinheit ist eine Lichtformeinrichtung angekoppelt, die eine Optik mit einer Linse oder einem Linsensystem zur Lichtmischung und/oder Strahlformung der von der Lichterzeugungseinheit abgegebenen Lichtstrahlen enthält und zur Fokussierung der Lichtstrahlen bzw. zur Veränderung des Halbstreuwinkels in Richtung der optischen Achse des LED-Scheinwerfers verstellbar ist. Die Lichtformeinrichtung kann mit einem Scheinwerfer-Zubehör zur Veränderung des Abstrahlwinkels und/oder zur Erzeugung spezieller Lichteffekte verbunden werden, das aus gegeneinander verschiebbaren Linsenplatten, einem Flügeltor, Gitter oder Diffuser oder aus Scrims, Gobos, holografischen Streufolien oder dergleichen besteht.

Aufgabe der vorliegenden Erfindung ist es, eine LED-Leuchte mit einer aus mehreren Leuchtdioden (LEDs) zusammengesetzten Lichtquelle zu schaffen, die einen weiten Verstellbereich des Halbstreuwinkels ermöglicht, ein homogenes, weich auslaufendes Lichtfeld gewährleistet und in der Flood-Einstellung eine harte Lichtquelle sowie in der Spot-Einstellung eine weiche Lichtquelle ergibt.

Diese Aufgabe wird erfindungsgemäß durch eine LED-Leuchte mit einer aus mehreren Leuchtdioden (LEDs) zusammengesetzten Lichtquelle entsprechend den kennzeichnenden Merkmalen der Ansprüche 1 und 2 gelöst.

Die erfindungsgemäßen Lösungen stellen eine LED-Leuchte mit einer aus mehreren LEDs zusammengesetzten Lichtquelle bereit, die einen weiten Verstellbereich des Halbstreuwinkels ermöglicht, ein homogenes, weich auslaufendes Lichtfeld gewährleistet und in der Flood-Einstellung eine harte Lichtquelle ergibt, da hier die Lichtquelle nah an der Feldoptik steht und auf der Feldoptik nur einen kleinen Lichtfleck erzeugt, während sie in der Spot-Einstellung eine weiche Lichtquelle ergibt, weil in dieser Einstellung die Lichtquelle so weit von der Feldoptik entfernt steht, dass ihr Licht den Durchmesser der Feldoptik ausfüllt.

Dem entsprechend weist in einer ersten Lösung die Kollimationsoptik auf ihrer Lichteintrittsseite kegelförmige Totalreflexionslinsen, die jeweils unmittelbar vor einer LED angeordnet und auf diese ausgerichtet sind, und auf ihrer Lichtaustrittsseite eine Stufenlinsenstruktur nach Art einer Fresnellinse auf und die von den LEDs abgegebenen Lichtstrahlen so umlenkt, dass sie die Lichteintrittsfläche der Mischoptik im Wesentlichen vollständig mit Licht ausfüllen.

Durch die Anordnung einer Kollimationsoptik, die das von den LEDs der aktiven Lichtquelle abgestrahlte Licht sammelt und auf eine Fläche lenkt und bündelt wird die nachgeordnete Mischoptik über die gesamte Lichteintrittsfläche ausgeleuchtet und kann das in eine Fläche gelenkte und gebündelte, aus verschiedenen Richtungen auftreffende Licht optimal mischen und mit dem gleichen Winkel an eine Feldoptik abstrahlen, die das von der Mischoptik abgestrahlte Licht aufnimmt und mit vorgegebener Lichtverteilung in ein Fernfeld abstrahlt.

In einer zweiten Lösung besteht die Kollimationsoptik aus diskreten optischen Elementen, die das von den auf einer ebenen Fläche angeordneten LEDs in der gleichen Abstrahlrichtung abgestrahlte Licht auf eine entfernte Fläche bündeln, wobei die LEDs mit den optischen Elementen auf einer Platine angeordnet sind, die sich in der Ebene der Mischoptik befindet und in einem zentralen Bereich die Mischoptik aufnimmt oder umgibt, und dass die von den optischen Elementen abgegebenen Lichtstrahlen auf einen Reflektor gerichtet sind, der die Lichtstrahlen auf die Mischoptik zurückwirft, die das gemischte Licht entgegen der Abstrahlrichtung der LEDs abgibt.

In dieser besonders platzsparenden Ausführungsform sind die LEDs und die Kollimationsoptiken auf einer Platine angeordnet, die sich in der Ebene der Mischoptik befindet, wobei die LEDs in die Gegenrichtung zur Mischoptik abstrahlen. Die Platine selbst besitzt in ihrem Zentrum eine Öffnung für die Mischoptik, so dass die LEDs ringförmig um die Mischoptik angeordnet sind. Ein ebener Spiegel mit etwa dem halben Durchmesser der LED-Platine befindet sich in der Abstrahlrichtung der LEDs und lenkt das Licht zurück auf die Mischoptik. Auf diese Weise wird zwischen den LEDs und der Mischoptik nur die halbe Baulänge benötigt.

In einer weiteren Ausführungsform befindet sich an der Position des oben genannten Spiegels ein konkav gekrümmter bis kegelförmiger und vorzugsweise facettierter Spiegel, der ebenfalls das Licht der LEDs zurück in die Mischoptik strahlt. Der besondere Vorteil bei dieser Anordnung besteht darin, dass alle Kollimationsoptiken der einzelnen LEDs das Licht gerade nach hinten abstrahlen und somit wieder identisch ausgeführt werden können.

In einer Kombination der beiden vorstehend genannten Ausführungsformen werden sowohl winkelablenkende Kollimationsoptiken als auch gerade abstrahlende Kollimationsoptiken eingesetzt, deren Strahlen durch ebene bzw. gekrümmte Spiegelflächen zur Mischoptik zurückgespiegelt werden. Das ist dann vorteilhaft, wenn einerseits eine große Zahl von unterschiedlichen Kollimationsoptiken vermieden und andererseits ein bestimmter Eintrittswinkel an der Mischoptik nicht überschritten werden soll.

In einer weiteren Ausführungsform besteht das spiegelnde Element aus einem konvex gekrümmten bis kegelförmigen, vorzugsweise facettierten Reflektor und die LEDs mit den Kollimationsoptiken sind in einem oder mehreren Ringen um die optische Achse des Scheinwerfers angeordnet. Auch diese Anordnung ermöglicht die Verwendung von einer Sorte von gleichartigen Kollimationsoptiken pro Ring und eine optimale Wärmeabfuhr von den LEDs, die dann an die Außenseite der LED-Leuchte angekoppelt werden können. Der Nachteil dieser Anordnung besteht wieder darin, dass die LEDs auf komplizierte Weise montiert und elektrisch kontaktiert werden müssen.

Um dies zu vermeiden, kann auch eine polygonale Außenhülle verwendet werden, wobei dann aber Kollimationsoptiken eingesetzt werden müssen, welche das Licht in bis zu zwei unterschiedliche Richtungen ablenken.

Die ringförmige bzw. polygonale Anordnung der LEDs und der Kollimationsoptiken kann durch weitere LEDs und Kollimationsoptiken zur Erzielung einer höheren Leistungsdichte ergänzt werden, die sich auf der Ebene der Mischoptik befinden und die nach hinten abstrahlen. In diesem Fall ist ein ebener Reflektor bei Verwendung von ablenkenden Kollimationsoptiken und ein konkaver Reflektor bei gerade abstrahlenden Kollimationsoptiken erforderlich. Weitere Mischformen aus unterschiedlich orientierten LEDs, unterschiedlich Licht ablenkenden Kollimationsoptiken und unterschiedlich positionierten und gekrümmten Spiegelflächen sind denkbar.

Um der wellenlängenabhängigen Brechung der der aktiven Lichtquelle nachgeordneten optischen Elemente Rechnung zu tragen, sind die kurzwelliges Licht abgebenden LEDs vorwiegend im Mittenbereich und langwelliges Licht abgebende LEDs vorwiegend im Außenbereich einer LED-Platine angeordnet, da langwelliges Licht stärker gebrochen wird als kurzwelliges Licht.

Ein weiterer Vorteil der relativ weit verteilten Anordnung der LEDs ist, dass dadurch Raum geschaffen wird für die Kollimationslinsen, die umso effektiver und eng bündelnder wirken, je größer der verfügbare Raum um die LED ist.

Die Anzahl und die Typen der farbiges Licht abstrahlenden LEDs auf der LED-Platine sind vorzugsweise auf eine vorgegebene Farbtemperatur, beispielsweise auf eine Farbtemperatur von 2.800 °K bis 6.500 °K abgestimmt.

Alternativ können die Anzahl und die Typen der farbiges Licht abstrahlenden LEDs auf der LED-Platine auf eine variable Farbtemperatur, insbesondere auf einen einstellbaren Farbtemperaturbereich von 2.800 °K bis 6.500 °K, abgestimmt werden.

Vorzugsweise wird zumindest ein Teil des von den LEDs abgestrahlten Lichts durch einen Farbfilter gelenkt, so dass das Spektrum des vom Scheinwerfer abgestrahlten Lichts in einer vorgebbaren Weise verändert wird.

Durch die Kombination aus der spektralen Abstrahlcharakteristik der LEDs und der spektralen Transmission des Farbfilters, insbesondere einer Farbfolie, wird das vom Scheinwerfer abgestrahlte Licht farblich so optimiert, dass damit ein gewünschter Farbort und/oder eine gewünschte Farbwiedergabe bei maximaler Helligkeit erreicht werden.

In bevorzugter Ausführung ist die Farbfolie zur Erzielung einer bestimmten Transmissions-Charakteristik strukturiert oder gelocht.

Durch die vollständige oder teilweise Filterung des von den LEDs abgegebenen Lichts können beispielsweise weiße LEDs mit schlechterer Farbwiedergabe aber hoher Effizienz eingesetzt werden. Mit Hilfe des Farbfilters wird das von den LEDs abgegebene Spektrum so weit verschoben, dass die Farbwiedergabe optimiert wird. Die Effizienz kann dann immer noch höher sein, als wenn passende LEDs eingesetzt worden wären. Auch der Farbort und die Farbtemperatur können mit Hilfe eines Farbfilters, insbesondere einer Farbfilterfolie, verschoben werden.

Zur Abfuhr der bei der Lichterzeugung entstehenden Wärme ist die LED-Platine mit einem Kühlkörper oder mit einer Kühleinrichtung mit einem bewegten Kühlmedium, insbesondere mit einem Lüfter zur Kühlung der LEDs, verbunden.

Durch die Anordnung der LEDs auf einer im Vergleich zu den Abmessungen der LEDs großen Fläche entsteht nur eine geringe Leistungsdichte. Die Ableitung der Verlustwärme ist bei diesem Konstruktionsprinzip deshalb leicht möglich und kann bis zu Leistungen von mehreren Hundert Watt auch mit einfachen, passiven Kühlkörpern erreicht werden. Bei einer Leuchtfläche mit großer Leistungsdichte ist dagegen meist eine Ableitung der Wärme durch Heatpipes in Verbindung mit Lüftern erforderlich.

Vorzugsweise formt die Kollimationsoptik die von den LEDs abgegebenen Lichtstrahlen in einen parallelen oder leicht konvergenten Strahlengang um, der die Lichteintrittsfläche der Mischoptik im Wesentlichen vollständig mit Licht ausfüllt.

Die primäre oder aktive Lichtquelle ist aus mehreren gleich- oder verschiedenfarbigen LEDs zusammengesetzt, die wahlweise bereits mit einer Primäroptik versehen sind, insbesondere, wenn diese bereits herstellerseitig eingebaut sind.

Die LEDs der aktiven Lichtquelle können alternativ auf einer ebenen oder auf der Innenseite einer gekrümmten Fläche angeordnet werden. Bei einer Anordnung der LEDs auf einer ebenen Fläche, beispielsweise auf einer ebenen Leiterplatte, Metallkernplatine, Epoxydharzplatine oder Keramikplatine, strahlen die LEDs Licht in der gleichen Abstrahlrichtung ab, wobei die Kollimationsoptik aus mehreren diskreten, optischen Elementen mit unterschiedlicher Abstrahlrichtung zusammengesetzt ist, die das von den LEDs abgestrahlte Licht in einem Punkt oder in einer Ebene fokussieren.

Der Vorteil einer derartigen Anordnung der LEDs auf einer ebenen Fläche besteht darin, dass die LEDs maschinell und gegebenenfalls zusammen mit anderen Bauteilen auf der Leiterplatte, Metallkernplatine, Epoxydharzplatine oder Keramikplatine bestückt und elektrisch kontaktiert werden können. Nachteilig ist, dass jedes optische Element der Kollimationsoptik unterschiedlich ausgebildet ist, da jede LED in einem anderen Winkel in Bezug auf die nachgeordnete Mischoptik abstrahlt.

In der alternativen Anordnung der LEDs der aktiven Lichtquelle auf der Innenseite einer gekrümmten Fläche, beispielsweise einer hohen Teil- oder Halbkugel, einer Hohlparabel oder einer asphärischen Hohlfläche, strahlen die LEDs Licht zum Krümmungsmittelpunkt oder Brennpunkt der gekrümmten Fläche ab, so dass für mehrere oder sämtliche LEDs der aktiven Lichtquelle die gleiche Kollimationsoptik vorgesehen werden kann.

Der Vorteil dieser Anordnung besteht darin, dass für mehrere oder alle LEDs gleichartige Kollimationsoptiken verwendet werden können, da die LEDs bereits die gewünschte Abstrahlrichtung haben. Nachteilig ist eine aufwändigere Montage und ein aufwändiger elektrischer Anschluss der LEDs, da sie sich auf einer gekrümmten Fläche befinden und je nach Höhe der LEDs und der Kollimationsoptiken ein großer Abstand der LEDs zueinander erforderlich ist.

Bei der Kollimationsoptik handelt es sich um ein Linsensystem, das in Abstrahlrichtung des von den LEDs abgestrahlten Lichts mit den LEDs verbunden ist und das Licht in einem Punkt bzw. in einer Ebene kollimiert oder fokussiert. Durch die Überlagerung des Lichts der einzelnen LEDs wird hier auch bereits eine Farbmischung durchgeführt. Als Kollimationsoptik können kollimierende oder fokussierende Linsen oder Linsensysteme, vorzugsweise aus optischen Kunststoffen, eingesetzt werden, welche einen möglichst hohen Anteil der von den LEDs abgegebenen Strahlung auffangen und in Abstrahlrichtung der LED-Leuchte mit einer gewünschten Lichtverteilung abstrahlen. Vorzugsweise werden TIR-Linsen (Total Internal Reflection) zur Optimierung des Wirkungsgrades eingesetzt.

Bei einer Anordnung der LEDs der aktiven Lichtquelle auf einer ebenen Fläche besteht die Kollimationsoptik aus optischen Elementen mit unterschiedlicher Abstrahlrichtung oder aus einer Optik-Platte, in die optische Flächen mit unterschiedlicher Abstrahlrichtung eingearbeitet sind.

Bei einer Anordnung der LEDs der aktiven Lichtquelle auf einer gekrümmten Fläche werden dagegen gleichartige, diskrete optische Elemente als Kollimationsoptik eingesetzt, die über die LEDs gesetzt werden können. Auch diese optischen Elemente können in eine gemeinsame Optik-Baugruppe eingearbeitet sein.

Die Mischoptik besteht aus einem oder mehreren optischen Elementen, welche das von der Kollimationsoptik abgestrahlte Licht farblich mischen. Die Austrittsseite der Mischoptik arbeitet dabei als sekundäre oder passive Lichtquelle.

Die Mischoptik strahlt das aus verschiedenen Richtungen auftreffende Licht mit etwa dem gleichen Winkel ab und weist mindestens ein optisches Element auf, welches das in Abstrahlrichtung von der der Kollimationsoptik abgestrahlte Licht mischt und so an der Lichtaustrittsseite als sekundäre Lichtquelle wirksam ist.

Mögliche Ausführungsformen der Mischoptik sind
- eine Diffusorscheibe oder ein Diffusorkörper mit mehr oder weniger starker Streuung, beispielsweise in Form einer Milchglasscheibe, einer diffusen Kunststoffscheibe oder einer diffusen Halbkugel aus Kunststoff. Der Vorteil dieser Ausführungsform besteht in der optimalen Farbmischung bei hoher Streuung, nachteilig ist eine geringe Transmission und damit ein geringer Wirkungsgrad bei hoher Streuung;
- ein gegebenenfalls auch voll durchlässiger Diffusor mit einer Struktur auf der Eintrittsseite und/oder der Austrittsseite, beispielsweise in Form von Waben, Prismen, Mikrolinsen und dergleichen;
- ein sog. holografischer Diffusor, der durch Abformen aus einem Master-Hologramm gewonnen wird und der eine definierte Streuung in Verbindung mit einem höheren Wirkungsgrad als ein herkömmlicher, absorbierender Diffusor aufweist,
- ein Diffusor mit einem "Intensifier" auf der Lichtaustrittsseite, der aus einem innenverspiegelten Kegel besteht und damit einen besseren Wirkungsgrad aufweist;
- ein Wabenkondensor, dessen Vorteil in der hohen Transmission und dessen Nachteil darin liegt, dass ein bestimmter Ein- und Ausfallswinkel des Lichts nicht überschritten werden kann und dass deshalb eine große Baulänge des optischen Systems bzw. Scheinwerfers erforderlich ist;
- ein Lichtmischstab oder Taper, dessen Vorteil in der hohen Transmission und dessen Nachteil in der großen Bautiefe und abnehmenden Transmission bei guter Farbmischung besteht.

Die vorzugsweise als Feldlinse ausgebildete Feldoptik weist auf der Lichteintrittsseite eine Strahl-Aufweitungsstruktur und auf der Lichtaustrittsseite eine fokussierende Struktur, insbesondere eine Fresnel-Struktur, auf.

Die Feldoptik kann entweder als einzelne Sammellinse, welche die Austrittsfläche der Mischoptik bzw. sekundären oder passiven Lichtquelle in das Fernfeld abbildet und zur Erzielung eines variablen Abstrahlwinkels verschiedene Abstände zur Mischoptik einnimmt, oder als Linsensystem mit vorwiegend abbildenden Eigenschaften ausgebildet werden, welche die Austrittsfläche der Mischoptik oder eine davor liegende Ebene exakt in eine weit entfernt liegende Ebene abbildet.

Als Sammellinse kann eine Konvexlinse, Plankonvexlinse, asphärische Sammellinse, Stufenlinse oder Stufenlinse mit eingearbeiteter Streustruktur (NOFS-Linse) eingesetzt werden. Zur Erzielung einer besseren Farbmischung und/oder zur Erzielung eines weichen Verlaufs des Lichtfeldes kann die Ein- und Austrittsseite der Sammellinse mit einer Struktur, beispielsweise einer Waben-, Prismen-, Mikrolinsen oder regelmäßigen oder unregelmäßigen Diffusorstruktur, oder auch einer holografischen Streustruktur versehen werden.

Als Linsensystem mit vorwiegend abbildenden Eigenschaften kann eine Zoom-Optik oder eine Projektionsoptik eingesetzt werden.

Um zu erreichen, dass das von der aktiven Lichtquelle abgestrahlte Licht in der gewünschten Weise an der Mischoptik ankommt, können bedarfsweise weitere optische Elemente, wie Linsen oder Reflektoren zwischen der aktiven Lichtquelle und der Mischoptik angeordnet werden, die das von der aktiven Lichtquelle abgegebene Licht in entsprechender Weise umlenken oder umformen. Beispiele für derartige optische Elemente sind ebene oder gekrümmte Spiegel, Sammellinsen, Zerstreuungslinsen, Lichtleiter oder Lichtmischstäbe.

In gleicher Weise können zur Erzielung einer gewünschten Lichtverteilung im Fernfeld weitere optische Elemente, wie vorstehend angegeben, zwischen der Mischoptik und der Feldoptik angeordnet werden, die von der Mischoptik bzw. passiven Lichtquelle an der Lichtaustrittsseite der Mischoptik abgegebene Licht in geeigneter Weise umlenken oder umformen.

Die aktive Lichtquelle, die Kollimationsoptik und die Mischoptik können zu einer Lichterzeugungseinheit, insbesondere für einen LED-Scheinwerfer, zusammengefasst werden. Die Lichterzeugungseinheit enthält einen kegelstumpfförmigen Reflektor, dessen Mantelfläche innen verspiegelt ist, dessen offene Grundfläche an die Kollimationsoptik und dessen offene Deckfläche an die Mischoptik anschließt, so dass das von der Kollimationsoptik erfasste, von den LEDs abgegebene Licht nicht nur auf die Mischoptik gerichtet wird, sondern auch auftretendes Streulicht in den Strahlengang von der Kollimationsoptik zur Mischoptik zurückgeworfen wird, und damit der Wirkungsgrad erhöht wird. Vorzugsweise geht die offene Grundfläche des kegelstumpfförmigen Reflektors in einem die Kollimationsoptik einfassenden, hohlzylinderförmigen, innen verspiegelten Reflektorabschnitt über, mit dem der von den LEDs nach außen abgestrahlte Lichtanteil zur Kollimationsoptik zurückgespiegelt wird.

Bei einer derartigen Lichterzeugungseinheit wird die Mischoptik vorzugsweise in der Öffnung eines Ringflansches angeordnet, dessen Außendurchmesser gleich dem Außendurchmesser der LED-Platine und/oder einer mit der LED-Platine verbundenen kreisscheibenförmigen Platte ist, wobei der Ringflansch einerseits und die LED-Platine und/oder die kreisscheibenförmige Platte andererseits die Stirnseiten einer hohlzylinderförmigen Kartusche bilden, deren Zylindermantel mit dem Ringflansch und der LED-Platine und/oder der kreisscheibenförmigen Platte verbunden ist.

Dadurch kann die die Lichterzeugungseinheit aufnehmende Kartusche als kompakte Einheit mit einem hermetisch geschlossenen, wasserdichten Gehäuse ausgebildet werden, aus dem über eine Öffnung nur ein Stromversorgungs- und Steuerkabel herausgeführt wird, das mit den LEDs und einer Steuerelektronik für die LEDs verbunden ist. Zudem kann die Kartusche in unterschiedliche LED-Scheinwerfer eingesetzt werden, indem sie in einen Tubus des Scheinwerfergehäuses eingesetzt und mit diesem fest verbunden oder im Tubus in Längsrichtung beweglich angeordnet wird, was die Herstellung eines LED-Scheinwerfers bzw. unterschiedlicher Scheinwerfertypen wesentlich vereinfacht.

Zur optimalen Bauraumausnutzung ist der Ringflansch über als Abstandshalter wirkende Stehbolzen mit einer Steuerelektronik-Platine verbunden, die auf der dem Reflektor zugewandten Innenseite des Ringflansches eine Steuerelektronik zum Steuern und Regeln der LEDs aufweist. Die Außenfläche des kegelstumpfförmigen Reflektors, der Zylindermantel der Kartusche und die Innenseite des Ringflansches umschließen einen hinreichend großen Raum zur Aufnahme der Steuerelektronik und der von den Bauelementen der Steuerelektronik abgegebenen Wärmestrahlung.

Die Kollimationsoptik weist auf ihrer Lichteintrittsseite einen der LED-Platine zugewandten Kollimator mit auf die einzelnen LEDs ausgerichteten, kegelförmigen Totalreflexionslinsen und auf ihrer Lichtaustrittsseite eine Stufenlinsenstruktur nach Art einer Fresnellinse auf, wobei die Kollimationsoptik über Abstandshalter mit der LED-Platine verbunden ist, deren Länge so bemessen ist, dass die kegelförmigen Totalreflexionslinsen im optimalen Abstand zu den LEDs enden. Dabei sammeln die kegelförmigen Totalreflexionslinsen das von den auf der LED-Platine angeordneten LEDs abgestrahlte Licht über eine große Breite mit einem maximalen Raumwinkel.

Die LED-Platine weist eine Vielzahl LEDs und mehrere, verteilt angeordnete Thermofühler auf, die die Temperatur auf der LED-Platine in unterschiedlichen Temperaturzonen erfassen, so dass die Steuerelektronik beim Überschreiten von Grenzwerten der Temperatur die Leistungsaufnahme der LEDs reduzieren, bzw. die Stromzufuhr zu den LEDs unterbrechen kann, wodurch sichergestellt wird, dass an keiner Stelle auf der LED-Platine unzulässig hohe Temperaturen auftreten.

Die Messung der Temperaturen dient außerdem als Eingangssignal für die Steuerelektronik, die damit die Helligkeit und die Farbe des abgestrahlten Lichts auf den vorgesehenen Wert regeln kann. In gleicher Weise kann ein in den Strahlengang eingebrachter optischer Sensor, wie z.B. eine Photodiode, ein Farbsensor oder ein Minispektrometer ein Eingangssignal für die Steuerelektronik zur Regelung der Farb- und Helligkeitswerte liefern.

In Lichtabstrahlrichtung der Kartusche vor der Mischoptik ist eine entlang der optischen Achse der LED-Leuchte verstellbare Stufenlinse angeordnet, die das von der Mischoptik abgestrahlte Licht aufnimmt und mit durch den Abstand der Stufenlinse von der Mischoptik einstellbarer Lichtverteilung (Flood, Spot) in ein Fernfeld abstrahlt.

Die Stufenlinse weist auf ihrer Lichteintrittsseite eine Strukturierung auf, die aus spiralförmig angeordneten, fünfeckförmigen optischen Elementen besteht.

Da bei einer ebenen Lichteintrittsseite der Stufenlinse die örtliche Lichtverteilung auf der Lichtaustrittsseite des Kondensors der Mischoptik in einer Winkelverteilung abgebildet würde, wobei nach dem Kondensor aufgrund seines Wirkungsprinzips die von den mehrfarbigen LEDs abgegebenen Farben nicht absolut homogen verteilt wären, so dass Farbeffekte auftreten würden, beseitigt die besondere Strukturierung der Lichteintrittsseite der Stufenlinse trotz der Licht mischenden Eigenschaften der Mischoptik noch vorhandene Farbeffekte, so dass das aus den verschiedenfarbigen LEDs gemischte Licht homogen an das Fernfeld abgegeben wird.

Zum leichten Ein- und Verstellen der Lichtverteilung sind die Kartusche und die Stufenlinse in dem Tubus eines Leucht- oder Scheinwerfergehäuses angeordnet, wobei
- die Stufenlinse in Richtung der optischen Achse gegenüber der mit dem feststehenden Tubus verbundenen Kartusche der Lichterzeugungseinheit,
- der Tubus zusammen mit der Stufenlinse in Richtung der optischen Achse gegenüber der feststehenden Kartusche der Lichterzeugungseinheit oder
- die Kartusche der Lichterzeugungseinheit entlang der optischen Achse gegenüber der feststehenden, mit dem Tubus verbundenen Stufenlinse
verstellbar ist.

Diese unterschiedlichen Ver- und Einstellmöglichkeiten sind gegeben, weil die Lichterzeugungseinheit in einer Kartusche zusammengefasst ist und in dem Tubus des Leucht- oder Scheinwerfergehäuses angeordnet werden kann.

Vorzugsweise ist zwischen der Kartusche und dem Leuchten- oder Scheinwerfergehäuse eine manuell oder elektromotorisch betätigbare Verstelleinrichtung zur Längsverstellung der Kartusche im Leuchten- oder Schweinwerfergehäuse angeordnet.

Zur Fokussierung eines LED-Scheinwerfers bzw. zur Veränderung des Abstrahlwinkels des von einem LED-Scheinwerfer abgegebenen Lichts, der in einer Flood-Stellung einen großen Streuwinkel und in einer Spot-Stellung einen kleinen Streuwinkel aufweist, muss der Abstand zwischen der Lichterzeugungseinheit und der Optik der Lichtformeinrichtung verändert werden.

Um eine Abstrahlcharakteristik eines Stufenlinsenscheinwerfers zu erreichen, ist es daher sinnvoll, die Optik nah an die Lichtaustrittsöffnung der Lichterzeugungseinheit zu bringen, um in der Flood-Stellung eine Abstrahlung mit großem Streuwinkel und harter Schattenbildung zu erreichen. In einer von der Lichtaustrittsöffnung der Lichterzeugungseinheit entfernten Stellung der Linse oder des Linsensystems wird dann in der Spot-Stellung des LED-Scheinwerfers eine Abstrahlung mit kleinem Streuwinkel und weicher Schattenbildung erzeugt.

Wird die Linse oder das Linsensystem zur Veränderung des Abstrahlwinkels des LED-Scheinwerfers zwischen der in Abstrahlrichtung hinteren, der Lichtaustrittsöffnung der Lichterzeugungseinheit benachbarten Flood-Stellung zur Erzeugung eines großen Streuwinkels und der in Abstrahlrichtung vorderen, der Lichtaustrittsöffnung der Lichterzeugungseinheit entfernten Spot-Stellung zur Erzeugung eines kleinen Streuwinkels mit weicher Schattenbildung verstellt, so tritt das Problem auf, dass die Linse oder das Linsensystem in der hinteren Flood-Stellung einen so großen Abstrahlwinkel aufweist, dass das Scheinwerfergehäuse einen Tubus mit sehr großem Durchmesser benötigt, in dem die Linse oder das Linsensystem zur Veränderung der Abstrahlcharakteristik hin- und herbewegt wird.

Alternativ könnte man die Linse oder das Linsensystem zusammen mit dem vor der Linse oder dem Linsensystem angeordneten Scheinwerfer-Zubehör verstellen, was aber insbesondere bei einem langen Verstellweg, bei einer Neigung des LED-Scheinwerfers aus der Horizontalen heraus nach unten oder oben und bei schwerem Zubehör, wie beispielsweise motorisierten Flügeltoren, ebenfalls problematisch ist.

Darüber hinaus ist es problematisch, die Linse bzw. das Linsensystem zusammen mit dem Scheinwerfer-Zubehör präzise entlang der optischen Achse des LED-Scheinwerfers zu verstellen. Ein weiteres Problem besteht darin, dass der Abstand der Lichtaustrittsfläche des LED-Scheinwerfers zu einem vom LED-Scheinwerfer angestrahlten Objekt verändert wird, was zu einer Veränderung der vom LED-Scheinwerfer angestrahlten Fläche des Objekts führt.

Eine weiterführende Aufgabenstellung besteht somit darin, eine Veränderung der Abstrahlcharakteristik des LED-Scheinwerfers zwischen einer Flood-Stellung mit großem Streuwinkel und einer Spot-Stellung mit kleinem Streuwinkel bei einfacher Handhabung und präziser Veränderung des Abstrahlwinkels ohne bauliche Veränderung des LED-Scheinwerfers und Veränderung des Abstands der Lichtaustrittsfläche des LED-Scheinwerfers zum Objekt zu ermöglichen.

Durch die Anordnung eines zylinderförmigen Tubus im Leuchten- oder Scheinwerfergehäuse und einer die Lichterzeugungseinheit enthaltenden Kartusche und einer Feldlinse auf der Lichtaustrittsseite der LED-Leuchte, die relativ beweglich zueinander im Tubus angeordnet sind, ist eine einfache Handhabung und präzise Veränderung des Abstrahlwinkels gewährleistet, da die erforderlichen Bedienungselemente weiterhin am unbeweglichen Leuchten- oder Scheinwerfergehäuse angebracht werden können und die Präzision der Führung der die Lichterzeugungseinheit aufnehmenden Kartusche oder der Feldlinse entlang der optischen Achse eingehalten werden kann. Da die Lichtaustrittsöffnung des LED-Scheinwerfers nur unwesentlich größer als die Feldlinse oder das Feldoptiksystem sein muss, ist keine bauliche Veränderung des LED-Scheinwerfers erforderlich. Da die Lichtaustrittsfläche am unbeweglichen Teil des LED-Scheinwerfers angeordnet ist, erfolgt auch keine Veränderung des Abstands der Lichtaustrittsfläche des LED-Scheinwerfers zum angestrahlten Objekt.

Durch eine Verbindung der am Leuchten- oder Scheinwerfergehäuse angebrachten Lichtformeinrichtung mit dem Scheinwerfer-Zubehör wie gegeneinander verschiebbare Linsenplatten, Flügeltor, Gitter, Diffuser, Scrims, Gobos, holografischen Streufolien oder dergleichen ist zudem sichergestellt, dass schweres Zubehör wie motorisierte Flügeltore bei einer Veränderung des Abstrahlwinkels des LED-Scheinwerfers nicht bewegt werden muss, so dass die Handhabung des LED-Scheinwerfers weiter vereinfacht wird und keine aufwändigen, hohen Verstellkräften standhaltende Führungseinrichtungen erforderlich sind.

Vorzugsweise ist die Kartusche mit der Lichterzeugungseinheit entlang der optischen Achse des LED-Scheinwerfers gegenüber der Feldlinse verstellbar, die eine Einheit mit dem mit der Lichtformeinrichtung fest verbundenen Leuchten- oder Scheinwerfergehäuse bildet, was zu einem erheblichen Vorteil bei der Herstellung, Handhabung und Präzision der Führung sowie des Abstands der Lichtaustrittsfläche des LED-Scheinwerfers zum Objekt gegenüber einer Verstellung der Linse bzw. des Linsensystems und des Scheinwerfer-Zubehörs entlang der optischen Achse des LED-Scheinwerfers führt.

Vorzugsweise ist die Kartusche mit der Lichterzeugungseinheit in dem Leuchten- oder Scheinwerfergehäuse manuell oder elektromotorisch längsverstellbar geführt, so dass eine exakte Verstellung der Lichterzeugungseinheit entlang der optischen Achse des LED-Scheinwerfers und eine leichte Einstellung der Lichtverteilung (Flood oder Spot) gewährleistet sind.

Zur Erleichterung und präzisen Einstellung des Halbstreuwinkels des LED-Scheinwerfers kann zwischen dem Leuchten- oder Scheinwerfergehäuse und dem Tubus eine Verstelleinrichtung zur Längsverstellung der Kartusche vorgesehen werden, die als manuelle Verstelleinrichtung mit einem zur Außenseite des Basisgehäuses geführten Verstellhebel oder Verstellrad verbunden ist oder als elektromotorische Verstelleinrichtung ein elektromotorisch angetriebenes Spindel- oder Zahnstangengetriebe aufweist.

Weiterhin können am Leuchten- oder Scheinwerfergehäuse Drehgelenke angeordnet sein, die mit einem Haltebügel oder einem Stativ verbunden werden.

Die Kartusche der Lichterzeugungseinheit ist auf ihrer der Lichtaustrittsöffnung des LED-Scheinwerfers entgegen gesetzten Rückseite halbkugelförmig ausgebildet und weist an der halbkugelförmigen Rückseite Kühlrippen auf, über die die von der Kühleinrichtung aufgenommene, von der Lichterzeugungseinheit abgegebene Wärme nach außen abgeführt wird.

Anhand mehrerer in der Zeichnung dargestellter Ausführungsbeispiele sollen der der Erfindung zugrunde liegende Gedanke erläutert und weitere Ausführungsformen beschrieben werden. Es zeigen:
- Fig. 1: eine schematische Blockdarstellung des erfindungsgemäßen optischen Systems für eine LED-Leuchte, insbesondere für einen LED-Scheinwerfer;
- Fig. 2: eine schematische Darstellung einer aktiven Lichtquelle mit auf einer ebenen Platte oder Platine angeordneten und Licht in der gleichen Richtung abstrahlenden LEDs;
- Fig. 3: eine schematische Darstellung einer aktiven Lichtquelle mit auf der Innenseite einer gekrümmten Fläche angeordneten und Licht zum Krümmungsmittelpunkt oder Brennpunkt der gekrümmten Fläche abstrahlenden LEDs;
- Fig. 4: einen schematischen Schnitt durch eine aktive Lichtquelle mit auf einer Platine angeordneten LEDs und Kollimationsoptiken, einer in die Platine eingesetzten Mischoptik und einen das Licht der aktiven Lichtquelle zur Mischoptik reflektierenden ebenen Reflektor;
- Fig. 5: einen schematischen Schnitt wie in Fig. 4 mit einem konkav gekrümmten oder kegelförmigen Reflektor;
- Fig. 6: einen schematischen Schnitt durch eine aktive Lichtquelle mit in einem oder mehreren Ringen um die optische Hauptachse der LED-Leuchte angeordnete LEDs und Kollimationsoptiken und einen konvex gekrümmten bis oder kegelförmigen, vorzugsweise facettierten Reflektor;
- Fig. 7: einen schematischen Schnitt durch eine aus den Anordnungen gemäß den Fig. 4 bis 6 kombinierte Anordnung der LEDs und Kollimationsoptiken 5, der Mischoptik und eines konkav gekrümmten Reflektors.
- Fig. 8: einen schematischen Schnitt durch eine als Diffusorscheibe oder als Diffusor mit ein- und/oder austrittsseitiger Struktur ausgebildete Mischoptik;
- Fig. 9: einen schematischen Schnitt durch eine als Diffusor mit austrittsseitigem "Intensifier" ausgebildete Mischoptik;
- Fig. 10: eine schematische Darstellung eines optischen Systems für einen LED-Scheinwerfer mit einem Wabenkondensor in einer Flood-Einstellung des LED-Scheinwerfers;
- Fig. 11: eine schematische Darstellung wie in Fig. 10 in einer Spot-Einstellung des LED-Scheinwerfers;
- Fig. 12: eine schematisch-perspektivische Darstellung eines LED-Scheinwerfers mit einer in einer Kartusche angeordneten Lichterzeugungseinheit und einer als Stufenlinse ausgebildeten Feldoptik;
- Fig. 13: eine schematische Darstellung der Schnittstellen der Lichterzeugungseinheit;
- Fig. 14: eine perspektivische Darstellung einer mit LEDs und NTC-Widerständen bestückten LED-Platine;
- Fig. 15: eine schematische Darstellung der Farbverteilung der auf der LED-Platine gemäß Fig. 14 angeordneten farbigen LEDs;
- Fig. 16: eine schematische Skizze des optischen Strahlengangs des LED-Scheinwerfers;
- Fig. 17: eine perspektivische Darstellung der aktiven Lichtquelle, Kollimationsoptik und Mischoptik und eines kegelstumpfförmigen Reflektors;
- Fig. 18: eine perspektivische Darstellung der Anordnung gemäß Fig. 17 mit Blick auf eine Steuerelektronik, die auf einem um die Mischoptik angeordneten Ringflansch angeordnet ist;
- Fig. 19: eine Draufsicht auf die Lichteintrittsseite der Kollimationsoptik;
- Fig. 20: eine Seitenansicht der Kollimationsoptik gemäß Fig. 19;
- Fig. 21: einen Schnitt durch die Kollimationsoptik entlang der Linie A - A gemäß Fig. 19;
- Fig. 22: eine Draufsicht auf die Lichtaustrittsseite der Kollimationsoptik;
- Fig. 23: eine perspektivische Ansicht der Kollimationsoptik;
- Fig. 24: eine Draufsicht auf die Lichteintrittsseite eines als Mischoptik eingesetzten Kondensors;
- Fig. 25: eine Draufsicht auf die Lichtaustrittsseite des Kondensors gemäß Fig. 24;
- Fig. 26: eine Seitenansicht des Kondensors gemäß Fig. 24;
- Fig. 27: einen Schnitt durch den Kondensor entlang der Linie A - A gemäß Fig. 24;
- Fig. 28: eine Draufsicht auf die Lichtaustrittsseite einer als Feldoptik eingesetzten Stufenlinse;
- Fig. 29: einen Schnitt durch die Stufenlinse entlang der Linie A - A gemäß Fig. 28;
- Fig. 30: einen perspektivischen Ausschnitt aus der Mitte der Lichteintrittsseite der Stufenlinse gemäß den Fig. 28 und 29;
- Fig. 31: einen perspektivischen Ausschnitt vom Rand der Lichteintrittsseite der Stufenlinse gemäß den Fig. 28 und 29;
- Fig. 32: einen schematischen Längsschnitt durch den LED-Scheinwerfer gemäß den Fig. 12 bis 31;
- Fig. 33 - 36: verschiedene schematische Darstellungen der Lichtabstrahlung bei Flood- und Spoteinstellungen des LED-Scheinwerfers;
- Fig. 37: eine isometrische Darstellung eines LED-Scheinwerfers mit einem Basisgehäuse und einem gegenüber dem Basisgehäuse entlang der optischen Achse des LED-Scheinwerfers verstellbaren Verstellgehäuse mit einer Lichterzeugungseinheit;
- Fig. 38: eine Seitenansicht des LED-Scheinwerfers gemäß Fig. 1 in einer Flood-Stellung der Lichterzeugungseinheit mit einem großen Streuwinkel und
- Fig. 39: eine Seitenansicht des LED-Scheinwerfers in einer Spot-Stellung der Lichterzeugungseinheit mit einem kleinen Streuwinkel;

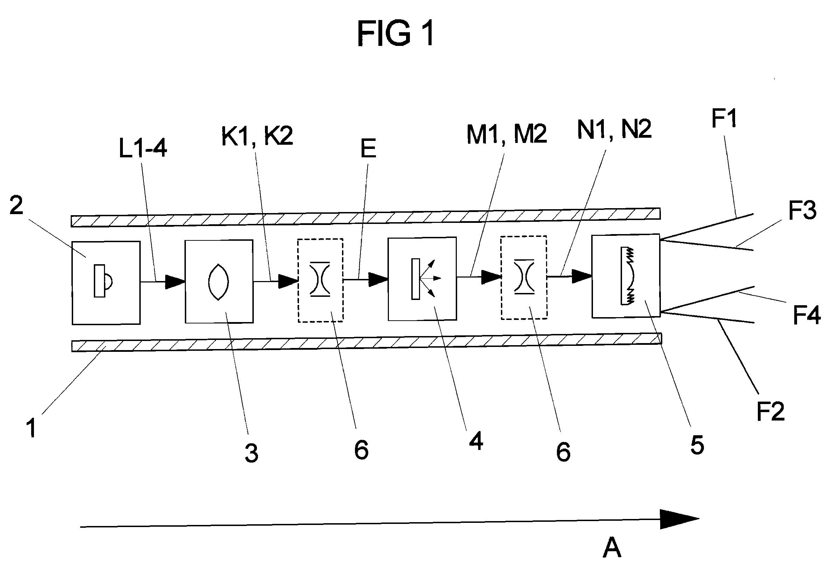

Fig. 1 zeigt in einer Blockdarstellung die Hauptbaugruppen des optischen Systems für eine LED-Leuchte, die im üblicherweise hohlzylindrischen Gehäuse 1 angeordnet sind. Eine aktive Lichtquelle 2 ("Light Engine") besteht aus mehreren gleich- oder verschiedenfarbigen LEDs, die alternativ auf einer ebenen oder einer gekrümmten Fläche angeordnet und gegebenenfalls mit vom Hersteller der LEDs eingebauten Primäroptiken versehen sind. Das von den LEDs der aktiven Lichtquelle 2 abgegebene Licht wird in Abstrahlrichtung A durch die LED-Leuchte geführt und in den nachfolgenden Baugruppen umgelenkt bzw. umgeformt, so dass die Lichtstrahlen in der gewünschten Weise an die jeweils nachfolgende Baugruppe abgegeben bzw. auf der Lichtaustrittsseite der LED-Leuchte ins Fernfeld abgestrahlt werden.

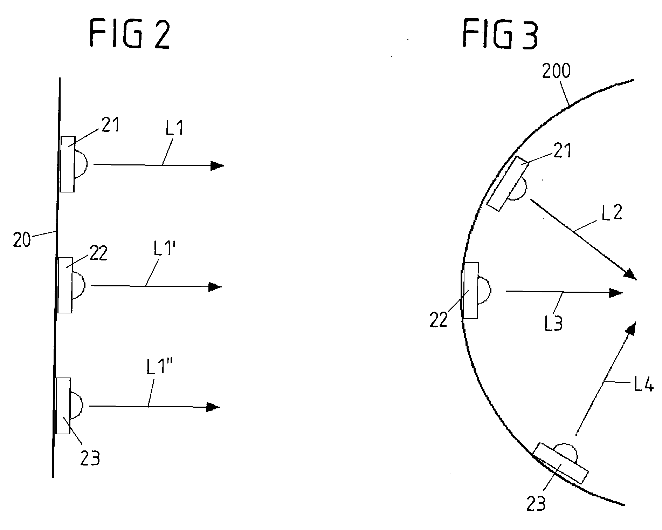

In den Fig. 2 und 3 sind zwei alternativen Ausführungsformen der aktiven Lichtquelle 2 dargestellt.

Fig. 2 zeigt die Anordnung von LEDs 21, 22, 23 auf einer ebenen Fläche 20, die Lichtstrahlen L1, L1', L1" in Abstrahlrichtung A abgeben. Als ebene Fläche kann eine Platte oder Platine in Form einer Metallkernplatine, Epoxydharzplatine oder Keramikplatine eingesetzt werden. Vorteilhaft bei dieser Anordnung ist die maschinelle Bestückung der ebenen Platte oder Platine mit den LEDs 21, 22, 23, die gegebenenfalls zusammen mit anderen Bauteilen bestückt und elektrisch kontaktiert werden können. Nachteilig ist, dass jedes Element der nachgeordneten Kollimationsoptik 3, die den einzelnen LEDs 21, 22, 23 zugeordnet wird, unterschiedlich ausgebildet ist, da jede LED 21, 22, 23 in einem anderen Winkel in Bezug auf die nachgeordnete Mischoptik 4 abstrahlt.

Fig. 3 zeigt in einer schematischen Darstellung die Anordnung von LEDs 21, 22, 23 der aktiven Lichtquelle 2 auf der Innenseite einer als Hohlkugel, Hohlparabel oder asphärische Hohlfläche ausgebildeten gekrümmten Fläche 200. Die LEDs 21, 22, 23 strahlen Licht L2, L3, L4 zum Krümmungsmittelpunkt bzw. Brennpunkt der gekrümmten Fläche 200 ab. Vorteilhaft hierbei ist, dass für mehrere oder alle LEDs 21, 22, 23 gleichartige Kollimationsoptiken verwendet werden können, da die LEDs 21, 22, 23 bereits Licht in der gewünschten Abstrahlrichtung abgeben. Nachteilig ist eine aufwändigere Montage und ein aufwändiger elektrischer Anschluss der LEDs 21, 22, 23 auf der gekrümmten Fläche 200 sowie je nach Höhe der LEDs 21, 22, 23 und der den LEDs 21, 22, 23 zugeordneten Kollimationsoptiken ein größerer Abstand der LEDs 21, 22, 23 zueinander.

Das von der aktiven Lichtquelle 2 abgegebene Licht wird in der Kollimationsoptik 3 in einem Punkt bzw. in eine Ebene kollimiert oder fokussiert, wobei es sich bei der Kollimationsoptik um einzelne Linsen, die auf die einzelnen LEDs aufgesetzt werden bzw. als Primäroptiken mit den LEDs herstellerseitig verbunden sind, oder um ein Linsensystem handelt, das Gruppen von LEDs oder sämtlichen LEDs zugeordnet wird. Als Kollimationsoptik 3 werden kollimierende oder fokussierende Linsen oder Linsensysteme, vorzugsweise aus optischen Kunststoffen, eingesetzt, die einen möglichst hohen Anteil der von den LEDs der aktiven Lichtquelle 2 abgegebenen Lichtstrahlen auffangen und in Abstrahlrichtung A mit einer gewünschten Lichtverteilung abstrahlen. Vorzugsweise werden TIR-Linsen (Total Internal Reflection) zur Optimierung des Wirkungsgrades der LED-Leuchte eingesetzt.

Wie vorstehend ausgeführt wurde, kann je nach Anordnung der LEDs 21, 22, 23 der aktiven Lichtquelle 2 auf einer ebenen Fläche 20 oder einer gekrümmten Fläche 200 die Kollimationsoptik 3 aus gleichartigen, diskreten, über die LEDs 21, 22, 23 gesetzten optischen Elementen oder aus diskreten optischen Elementen mit unterschiedlicher Abstrahlrichtung bestehen oder alternativ als komplette Optikplatte mit eingearbeiteten optischen Flächen ausgeführt werden.

Die von der Kollimationsoptik 3 abgegebenen Lichtstrahlen K1, K2 werden optional über eine optische Einrichtung 6 geleitet, die optische Elemente wie Linsen oder Reflektoren enthält, die das von der Kollimationsoptik 3 abgegebene Licht K1, K2 so umlenken oder umformen, dass es in der gewünschten Weise als Lichtstrahlen E der nachgeordneten Mischoptik 4 zugeführt wird.

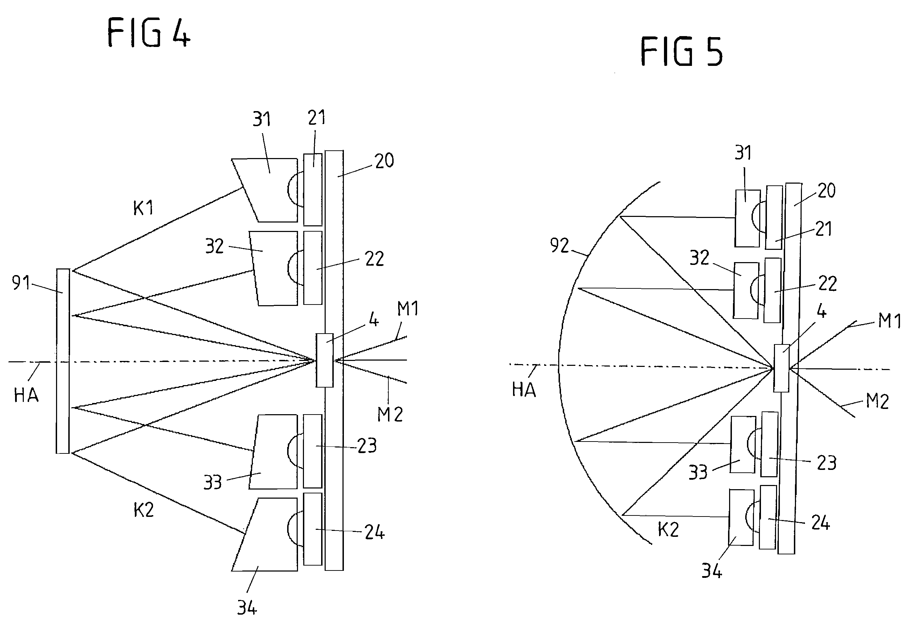

In den Fig. 4 bis 7 sind verschiedene platzsparende Anordnungen einer aktiven Lichtquelle mit LEDs und mit den LEDs verbundenen Kollimationsoptiken, einer Mischoptik und eines Reflektors dargestellt.

Fig. 4 zeigt eine Anordnung mit auf einer ebenen Platine 20 angeordneten LEDs 21 bis 24 mit aufgesetzten Kollimationsoptiken 31 bis 34. Die Platine 20 befindet sich in der Ebene der Mischoptik 4 und weist eine zentrale Öffnung zur Aufnahme der Mischoptik 4 in der optischen Hauptachse HA der LED-Leuchte auf, so dass die LEDs 21 bis 24 mit den darauf befindlichen Kollimationsoptiken 31 bis 34 ringförmig um die Mischoptik 4 angeordnet sind. Beabstandet zur Platine 20 ist ein als ebener Spiegel ausgebildeter Reflektor 91 angeordnet, der die in Gegenrichtung zur Mischoptik 4 ausgestrahlten Lichtstrahlen K1, K2 der Kollimationsoptiken 31 bis 34 auf die Mischoptik 4 zurückwirft, die gemischtes Licht, das durch die Randstrahlen M1 und M2 gekennzeichnet ist, über ihre Lichtaustrittsfläche abgibt.

Durch diese Anordnung wird für das möglichst vollständige Beleuchten der Lichteintrittsfläche der Mischoptik 4 nur die halbe Baulänge zwischen den LEDs 21 bis 24 bzw. Kollimationsoptiken 31 bis 34 und der Mischoptik 4 benötigt.

Fig. 5 zeigt in Abwandlung der Anordnung gemäß Fig. 4 die Anordnung eines als konkav gekrümmten oder kegelförmigen und vorzugsweise facettierten Spiegel ausgebildeten Reflektors 92, der das von den LEDs 21 bis 24 über die Kollimationsoptiken 31 bis 34 abgegebene Licht K1, K2 zurück auf die in der optischen Hauptachse HA der LED-Leuchte angeordnete Mischoptik 4 wirft. Durch die Anordnung des konkav gekrümmten bzw. kegelförmigen und vorzugsweise facettierten Spiegels als Reflektor 92 ist der Einsatz von gerade abstrahlenden und damit identisch ausgeführten Kollimationsoptiken 31 bis 34 möglich.

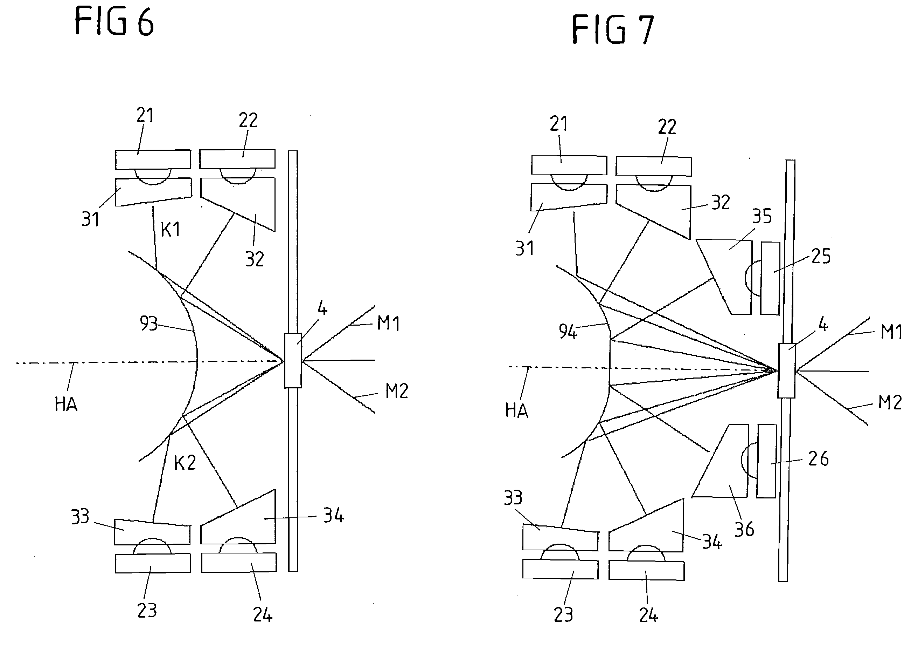

Fig. 6 zeigt eine Ausführungsform mit einem konvex gekrümmten bis kegelförmigen und vorzugsweise facettierten Reflektor 93 und in einem Ring oder in mehreren Ringen um die optische Hauptachse HA der LED-Leuchte angeordnete LEDs 21 bis 24 mit darauf angeordneten Kollimationsoptiken 31 bis 34. Der konvex gekrümmte bis kegelförmige und vorzugsweise facettierte Reflektor 93 wirft das von den LEDs 21 bis 24 über die Kollimationsoptiken 31 bis 34 abgestrahlte Licht K1, K2 auf die in der optischen Hauptachse HA der LED-Leuchte angeordnete Mischoptik 4 zurück, die Licht mit den Randstrahlen M1, M2 an die nachgeordneten optischen Einrichtungen abgibt.

In dieser Ausführungsform können ebenfalls gleichartige Kollimationsoptiken 31, 33 bzw. 32, 34 für jeden Ring eingesetzt werden und durch die zylinderringförmige Anordnung der LEDs 21 bis 24 ist eine optimale Wärmeabfuhr über das hohlzylindrische Gehäuse der LED-Leuchte gewährleistet.

Alternativ kann zur einfacheren Montage und elektrischen Kontaktierung der LEDs 21 bis 24 eine polygonale Außenhülle zur Aufnahme der LEDs 21 bis 24 bzw. eine polygonale Gehäuseform der LED-Leuchte eingesetzt werden, wenn gleichzeitig Kollimationsoptiken 31 bis 34 eingesetzt werden, die das von den LEDs 21 bis 24 abgegebene Licht in zwei unterschiedliche Richtungen ablenken.

In der Ausführungsform gemäß Fig. 7 ist zur Erzielung einer höheren Leistungsdichte eine ringförmige bzw. polygonale Anordnung von LEDs 21 bis 24 mit den zugeordneten Kollimationsoptiken 31 bis 34 mit auf einer ebenen Fläche angeordneten LEDs 25, 26 mit zugeordneten Kollimationsoptiken 35, 36 kombiniert, wobei sich die Ebene mit den LEDs 25, 26 in der Ebene der Mischoptik 4 befindet und beispielsweise als Platine mit einer zentralen Öffnung zur Aufnahme der Mischoptik 4 ausgebildet ist. Diese Anordnung ist mit einem kombinierten Reflektor 94 versehen, der eine ebene Fläche zur Reflektion der von den LEDs 25 und 26 bzw. den zugeordneten Kollimationsoptiken 35 und 36 abgebenden Lichtstrahlen und eine konkav gewölbte Fläche für die von den ringförmig bzw. polygonal angeordneten LEDs 21 bis 24 und Kollimationsoptiken 31 bis 34 abgegebenen Lichtstrahlen aufweist.

Die Mischoptik 4 besteht aus einem oder mehreren optischen Elementen, die das einfallende Licht E farblich mischen. An ihrer Austrittsseite wirkt die Mischoptik 4 als sekundäre oder passive Lichtquelle, die Lichtstrahlen M1, M2 abgibt.

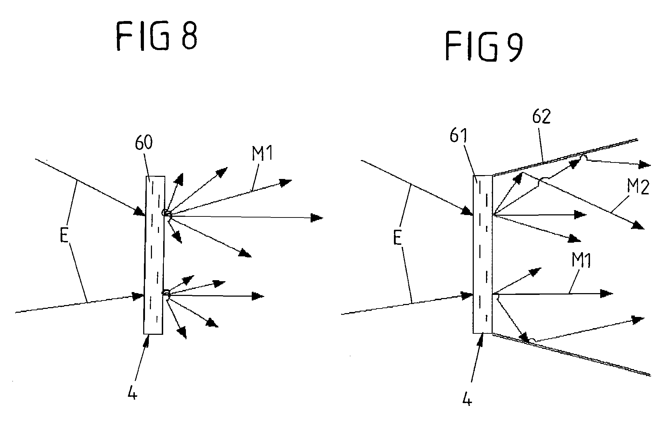

In den Fig. 8 und 9 sind zwei Ausführungsbeispiele für die Mischoptik 4 dargestellt.

Die in Fig. 8 im Schnitt dargestellte Mischoptik besteht aus einer Diffusorscheibe oder einem Diffusorkörper 60 mit mehr oder weniger starker Streuung, der die einfallenden Lichtstrahlen E in eine Vielzahl, in unterschiedliche Richtungen abgegebene Strahlen M1 zerstreut. Als Diffusorscheibe oder -körper eignet sich insbesondere eine Milchglasscheibe, eine diffuse Kunststoffscheibe oder eine diffuse Halbkugel aus Kunststoff. Anstelle einer Diffusorscheibe oder eines Diffusorkörpers kann ein gegebenenfalls voll lichtdurchlässiger Diffusor 61 eingesetzt werden, der mit einer Struktur auf der Lichteintrittsseite und/oder der Lichtaustrittsseite, beispielsweise in Form von Waben, Prismen, Mikrolinsen oder dergleichen, versehen ist.

In der Ausführungsform gemäß Fig. 9 besteht die Mischoptik aus einem Diffusor mit einem "Intensifier" auf der Lichtaustrittsseite in Form beispielsweise eines innen verspiegelten Kegels 62, der die auf ihn auftreffenden Lichtstrahlen M1 in den Kegelinnenraum als Lichtstrahlen M2 zurückwirft und dazu dient, den Abstrahlwinkel analog zu einem Taper zu verkleinern.

Die von der Mischoptik 4 abgegebenen Strahlen M1, M2 werden bedarfsweise über optische Elemente 7 geleitet, in denen das von der Mischoptik 4 abgegebene Licht mit den Randlichtstrahlen M1, M2 so umgelenkt bzw. umgeformt wird, dass die von den weiteren optischen Elementen 7 abgegebenen Randlichtstrahlen N1, N2 in einer nachgeordneten Feldoptik 5 so auftreffen, dass sich im Fernfeld eine gewünschte Lichtverteilung ergibt. Bei den weiteren optischen Elementen kann es sich um ebene oder gekrümmte Spiegel, Sammellinsen, Zerstreuungslinsen, Lichtleiter oder Lichtmischstäbe handeln.

Neben den anhand der Fig. 8 und 9 beschriebenen Ausführungsformen der Mischoptik 4 kann alternativ ein Wabenkondensor oder ein Lichtmischstab bzw. Taper eingesetzt werden.

Als Feldoptik 5 kann eine einzelne Sammellinse oder ein Linsensystem mit vorwiegend abbildenden Eigenschaften eingesetzt werden. Bei einer als einzelne Sammellinse ausgebildeten Feldoptik 5 wird die Austrittsfläche der Mischoptik 4 bzw. sekundären oder passiven Lichtquelle in das Fernfeld abgebildet und zur Erzielung eines variablen Abstrahlwinkels nimmt die Sammellinse verschiedene Abstände zur Mischoptik 4 ein.

Als Sammellinse kann eine Konvexlinse, Plankonvexlinse, asphärische Sammellinse, Stufenlinse oder Stufenlinse mit eingearbeiteter Streustruktur (NOFS-Linse) eingesetzt werden. Zur Erzielung einer besseren Farbmischung und/oder zur Erzielung eines weichen Verlaufs des Lichtfeldes kann die Ein- und Austrittsseite der Sammellinse mit einer Struktur, beispielsweise einer Waben-, Prismen-, Mikrolinsen oder regelmäßigen oder unregelmäßigen Diffusorstruktur versehen werden.

Eine als Linsensystem mit vorwiegend abbildenden Eigenschaften ausgebildete Feldoptik 5 bildet die Austrittsfläche der Mischoptik 4 oder eine davor liegende Ebene exakt in eine weit entfernt liegende Ebene ab.

Als Linsensystem mit vorwiegend abbildenden Eigenschaften kann eine Zoom-Optik oder eine Projektionsoptik eingesetzt werden.

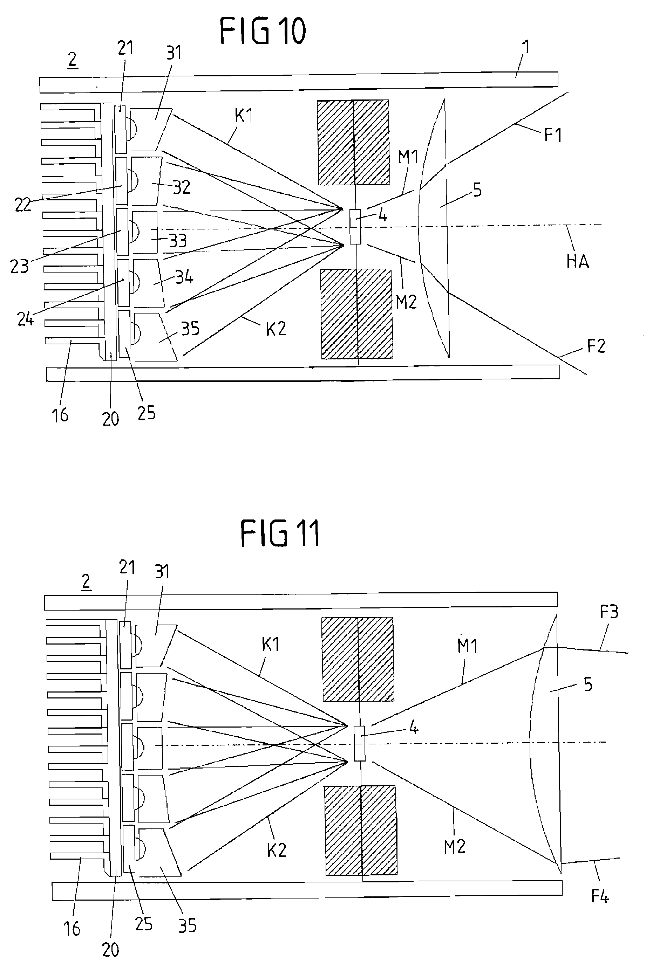

In den Fig. 10 und 11 ist eine konkrete Ausführungsform der erfindungsgemäßen LED-Leuchte in einem schematischen Längsschnitt dargestellt.

Eine aktive Lichtquelle 2 weist mehrere auf einer ebenen, mit einem Kühlkörper 26 verbundenen Platine 20 angeordnete LEDs 21, 22, 23, 24, 25 auf, auf die den einzelnen LEDs 21, 22, 23, 24, 25 zugeordnete Kollimationsoptiken 31, 32, 33, 34, 35 aufgesetzt sind, die das von den LEDs 21-25 abgestrahlte Licht entsprechend den eingetragenen Lichtsstrahlen K1, K2 auf eine Mischoptik 4 kollimieren bzw. fokussieren. Das mittels der beispielsweise als Wabenkondensor ausgebildeten Mischoptik 4 farblich gemischte Licht wird mit den Randlichtsstrahlen M1, M2 an eine nahe der Mischoptik 4 befindliche Feldoptik 5, beispielsweise in Form einer Stufenlinse mit eingearbeiteter Streustruktur (NOFS-Linse) abgegeben, die in dieser Flood-Einstellung der LED-Leuchte divergierende Randlichtstrahlen F1, F2 an das Fernfeld abgibt.

Alternativ hierzu befindet sich entsprechend der schematischen Schnittdarstellung gemäß Fig. 11 die Feldoptik 5 in einer von der Mischoptik 4 entfernten Stellung, so dass die von der Mischoptik 4 abgegebenen Randlichtstrahlen M1, M2 als konvergierende Randlichtstrahlen F3, F4 in der Spot-Einstellung der LED-Leuchte an das Fernfeld abgegeben werden.

Aufgrund des radial zwischen der Mischoptik 4 und dem Gehäuse 1 der LED-Leuchte verfügbaren Platzes kann die Elektronik der LED-Leuchte in dem schraffiert dargestellten Bereich 8 im Innern der LED-Leuchte angeordnet werden. Da die von den LEDs 21-25 der aktiven Lichtquelle 2 abgegebene Wärme über den Kühlkörper 26 nach außen abgeführt wird, weist der für die Elektronik verfügbare Raum 8 eine vergleichsweise geringe Temperatur auf.

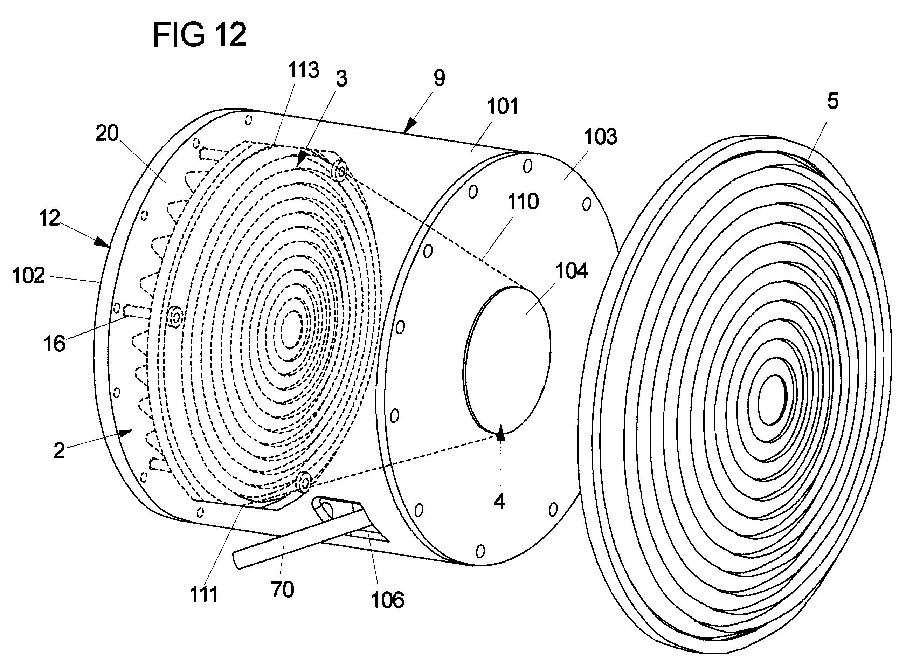

In den Fig. 12 bis 39 sind verschiedene LED-Scheinwerfer und deren Elemente als Anwendungsbeispiele für die in den Fig. 1 bis 11 dargestellten und vorstehend beschriebenen Varianten einer LED-Leuchte dargestellt.

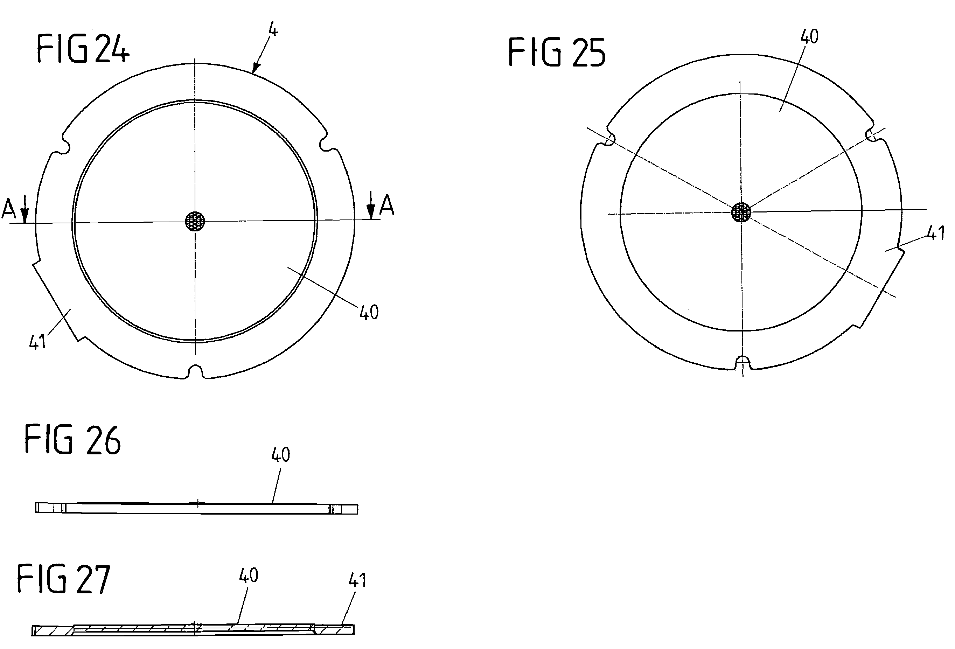

Fig. 12 zeigt in schematisch-perspektivischer Ansicht eine Lichterzeugungseinheit 9 und eine im Strahlengang der Lichterzeugungseinheit 9 angeordnete, als Stufenlinse ausgebildete Feldoptik 5 eines LED-Scheinwerfers. Die Lichterzeugungseinheit 9 ist in einer hohlzylindrischen Kartusche 10 angeordnet, die eine Zylindermantelfläche 101 aufweist, deren Stirnseiten durch einen Kreisscheibenflansch 102 und/oder eine kreisscheibenförmige LED-Platine 20 mit einem thermischen Interface 12 und einem Ringflansch 103 abgeschlossen sind. In einer kreisringförmigen Öffnung 104 des Ringflansches 103 der Kartusche 10 ist eine nachfolgend anhand der Fig. 24 bis 27 beschriebene, als Kondensor ausgebildete Mischoptik 4 angeordnet.

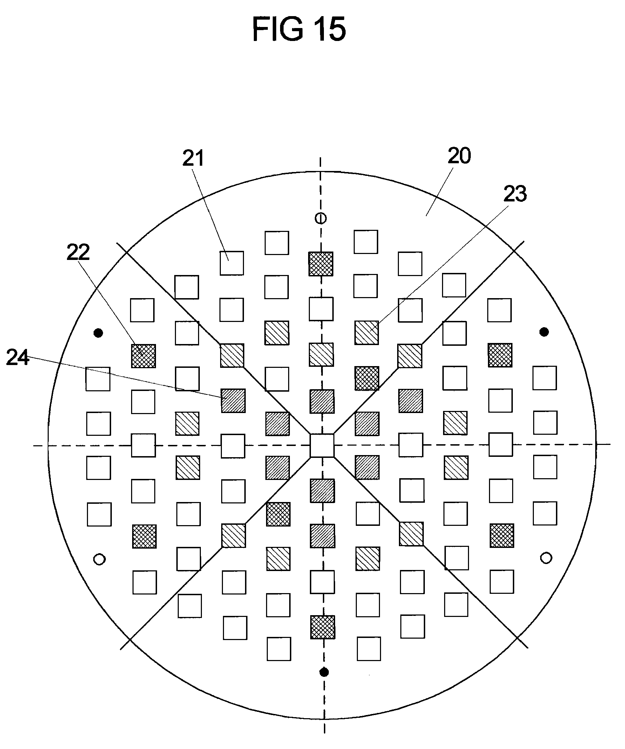

Die LED-Platine 20 weist auf ihrer dem Innenraum der Kartusche 10 zugewandten Oberfläche mehrere LEDs auf, deren Anordnung und Verteilung der Darstellung gemäß Fig. 15 zu entnehmen ist und nachfolgend näher erläutert wird.

Die LED-Platine 20 und/oder der kreisringförmige Flansch 102 der Kartusche 10 bilden auf ihrer nach außen gerichteten Außenfläche ein thermisches Interface aus, das mit einem Kühlkörper oder mit einer Kühleinrichtung mit einem bewegten Kühlmedium, insbesondere mit einem Lüfter zur Kühlung der LEDs, verbunden ist.

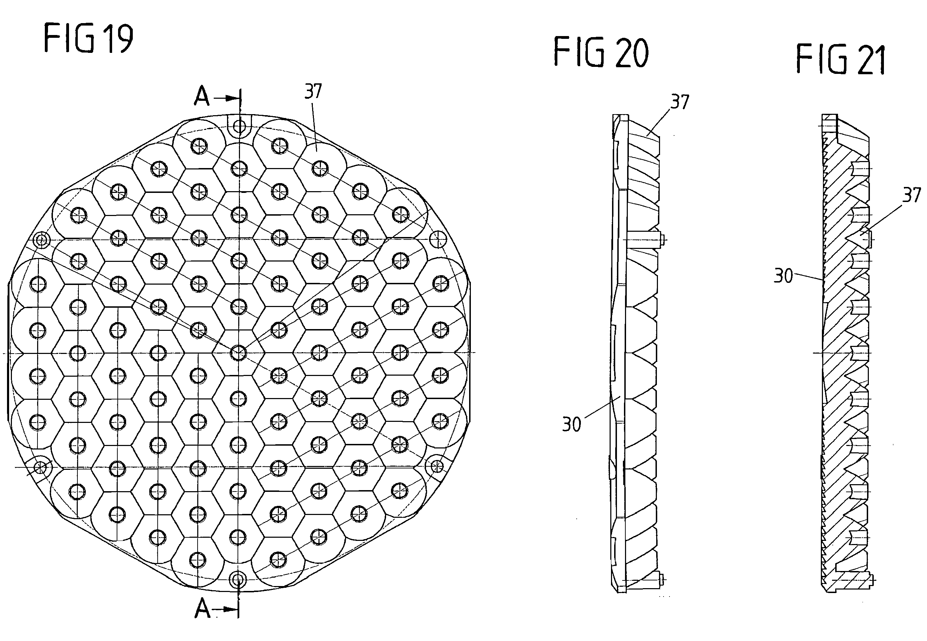

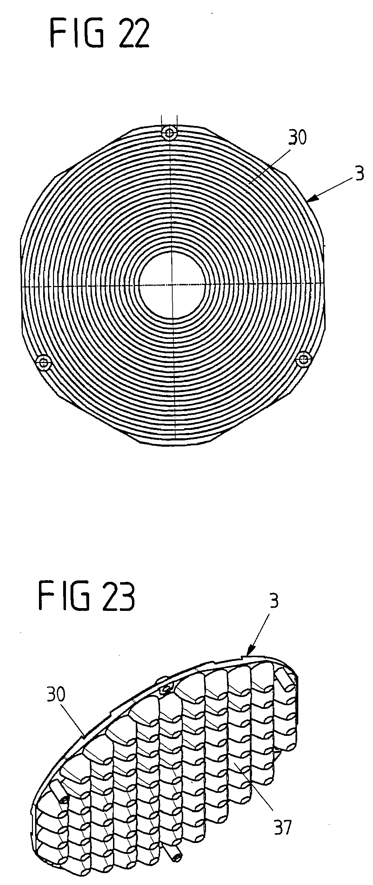

In Abstrahlrichtung der LEDs ist die LED-Platine 20 über Abstandshalter 16 mit einer in den Fig. 19 bis 23 dargestellten Kollimationsoptik 3 verbunden, die das von den einzelnen LEDs abgestrahlte Licht auf die Mischoptik 4 bündelt und entsprechend der in Fig. 19 dargestellten Draufsicht, der in Fig. 20 dargestellten Seitenansicht, dem in Fig. 21 dargestellten Schnitt entlang der Linie A - A gemäß Fig. 19 und der perspektivischen Gesamtansicht gemäß Fig. 23 auf ihrer Lichteintrittsseite einen der kreisscheibenförmigen LED-Platine 20 zugewandten Kollimator mit kegelförmigen, auf die einzelnen LEDs der aktiven Lichtquelle 2 ausgerichteten Totalreflexionslinsen 37 und auf ihrer Lichtaustrittsseite eine Stufenlinsenstruktur nach Art einer Fresnellinse aufweist. Die kegelförmigen Totalreflexionslinsen sammeln das von den auf der LED-Platine 20 angeordneten LEDs abgestrahlte Licht über eine große Breite mit einem maximalen Raumwinkel und befinden sich mit ihrer Lichteintrittsseite unmittelbar vor den LEDs. Zu diesem Zweck ist die Länge der Abstandshalter 16 so bemessen, dass die kegelförmigen Totalreflexionslinsen kurz vor dem auf der LED-Platine 20 angeordneten LEDs im optimalen Abstand enden.

Die Mischoptik 4 besteht in diesem Ausführungsbeispiel aus einem in Fig. 24 in einer Draufsicht auf die Lichteintrittsseite, in Fig. 25 in einer Draufsicht auf die Lichtaustrittsseite, in Fig. 26 in einer Seitenansicht und in Fig. 27 in einem Schnitt entlang der Linie A - A dargestellten Wabenkondensor, der einen dem Abstrahlwinkel der Kollimationsoptik 3 entsprechenden Lichteintritts- und Lichtaustrittswinkel von beispielsweise 25 ° und einen optisch wirksamen Bereich 40 sowie einen Befestigungsrand 41 aufweist.

Ein kegelstumpfförmiger Reflektor 11 mit innen verspiegelter Mantelfläche 110 schließt mit seiner offenen Grundfläche 111 an die Kollimationsoptik 3 und mit seiner offenen Deckfläche 112 an die Mischoptik 4 an. Dabei geht die offene Grundfläche 111 des kegelstumpfförmigen Reflektors 11 in einem die Kollimationsoptik 3 einfassenden, hohlzylinderförmigen, innen verspiegelten Reflektorabschnitt 113 über, damit der von den LEDs nach außen abgestrahlte Lichtanteil zur Kollimationsoptik 3 zurückgespiegelt wird.

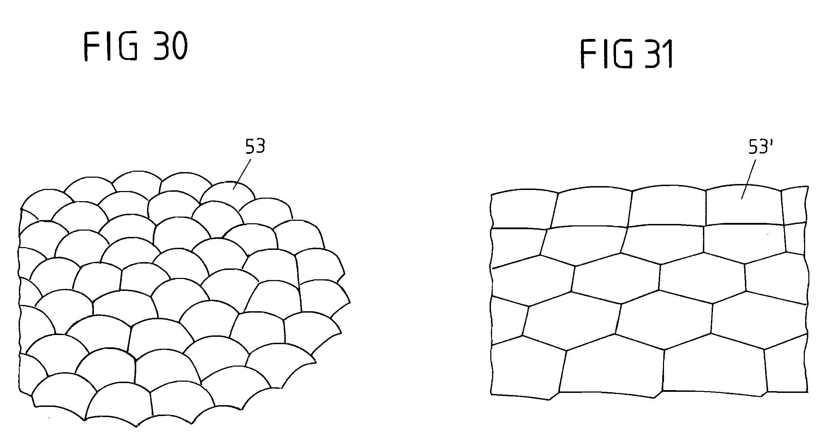

Die die Lichterzeugungseinheit 9 aufnehmende Kartusche 10 ist als kompakte Einheit mit einem hermetisch geschlossenen, wasserdichten Gehäuse ausgebildet, aus dem über eine Öffnung 106 ein Stromversorgungs- und Steuerkabel 70 herausgeführt ist, das mit den LEDs und einer Steuerelektronik für die LEDs verbunden ist. Wie nachfolgend an Hand der Fig. 30 bis 39 näher erläutert wird, kann die die Lichterzeugungseinheit 9 enthaltende Kartusche 10 in einen Tubus 1 des Scheinwerfergehäuses eingesetzt und mit diesem fest verbunden oder innerhalb des Tubus in Längsrichtung beweglich angeordnet werden.

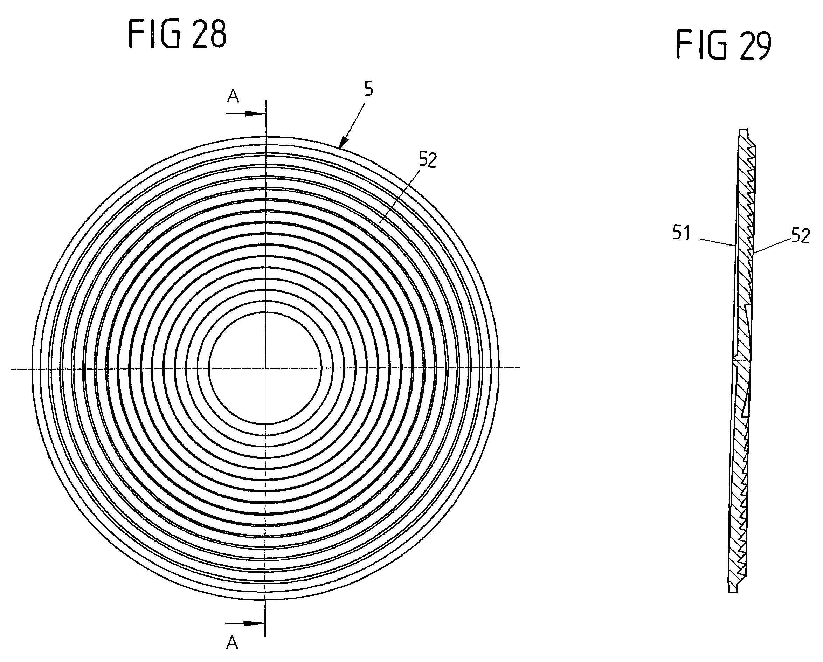

In Lichtabstrahlrichtung der Lichterzeugungseinheit 9 vor der als Kondensor ausgebildeten Mischoptik 4 ist eine entlang der optischen Hauptachse HA verstellbare Feldoptik eingesetzt, die aus einer in den Fig. 28 bis 31 dargestellten Stufenlinse 5 besteht, die das von der Mischoptik 4 abgestrahlte Licht aufnimmt und mit einer durch den Abstand der Feldoptik 5 von der Mischoptik 4 einstellbaren Lichtverteilung als Flood- oder Spotlicht in ein Fernfeld abstrahlt.

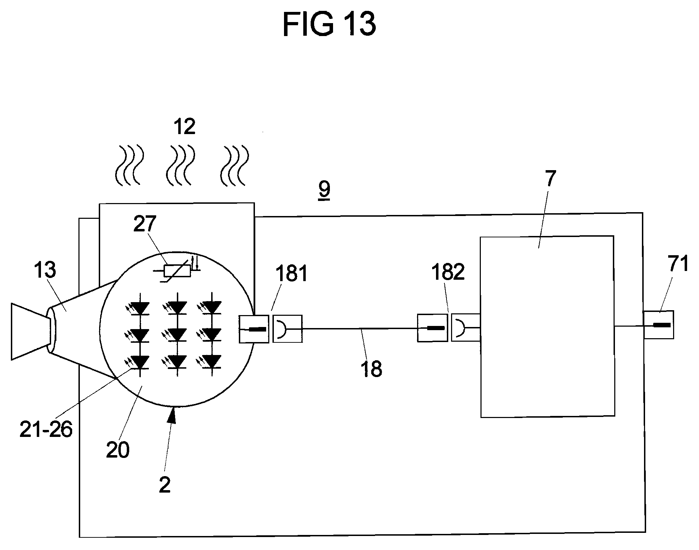

Fig. 13 zeigt eine schematische Darstellung der Schnittstellen der Lichterzeugungseinheit 9 mit der aktiven Lichtquelle 2, die die auf der LED-Platine 20 angeordneten LEDs 21 bis 26 sowie mehrere, verteilt angeordnete und vorzugsweise als NTC-Widerstände ausgebildete Thermofühler 27 aufweist, die die Temperatur auf der LED-Platine 20 in unterschiedlichen Temperaturzonen erfassen. Auf der LED-Platine 20 sind beispielsweise 85 LEDs 21 bis 27 unterschiedlicher Farbe, die in mehreren Farbkanälen zusammengefasst sind, sowie fünf als NTC-Widerstände ausgebildete Thermofühler 27 zur Erfassung der Temperatur in verschiedenen Temperaturzonen angeordnet. Über das thermische Interface 12 ist die LED-Platine 20 mit einem Kühlmedium, beispielsweise einem Kühlkörper, verbunden. Über ein optisches Interface 13 ist die LED-Platine mit der vorstehend beschriebenen Kollimationsoptik 3 verbunden, deren Strahlengang nachstehend erläutert wird.

Auf der Steuer- und Stromversorgungsseite ist die LED-Platine 20 über ein Interface 181 und eine interne Leitung 18 mit einem Interface 182 einer Steuerelektronik 7 verbunden, die ausgangsseitig über ein elektronisches Interface 71 unter anderem mit externen Steuereinrichtungen und einer Spannungsversorgung verbunden ist. Die Steuerelektronik 7 übernimmt die komplette Signalverarbeitung, Temperaturstabilisierung und Farbmetrik der Lichterzeugungseinheit 9 und ist ebenfalls innerhalb der hermetisch abgeschlossenen Kartusche 10 angeordnet.

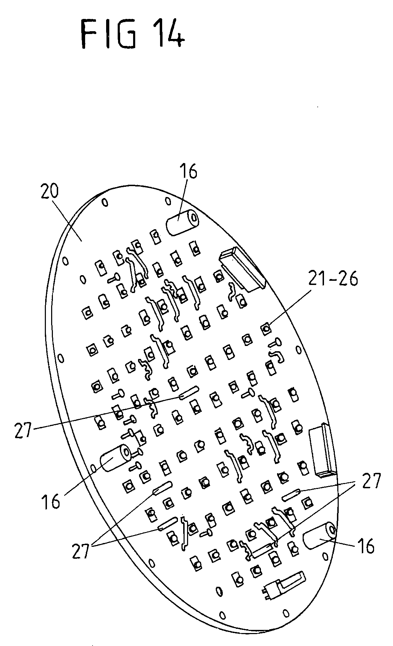

Fig. 14 zeigt in perspektivischer Darstellung eine Ansicht der Lichtabstrahlseite der LED-Platine 20 mit den auf der LED-Platine 20 angeordneten LEDs 21 bis 26, den verteilt angeordneten NTC-Widerständen 27 zur Erfassung der Temperatur auf der LED-Platine 20 in unterschiedlichen Temperaturzonen sowie die Abstandshalter 16, über die die Kollimationsoptik 3 mit der LED-Platine 20 der aktiven Lichtquelle 2 verbunden ist.

Fig. 15 zeigt in einer Draufsicht auf die LED-Platine 20 die Anordnung einer Vielzahl von LEDs, von denen die unschraffiert dargestellten LEDs 21 warmweißes Licht, die gekreuzt schraffiert dargestellten LEDs 22 rotes Licht, die links schraffierten LEDs 23 grünes Licht und die rechts schraffierten LEDs 24 blaues Licht abstrahlen. Wie der schematischen Darstellung der LED-Farbanordnung gemäß Fig. 15 zu entnehmen ist, sind wegen der wellenlängenabhängigen Brechung der nachgeordneten optischen Elemente die kurzwelliges Licht abgebenden blauen LEDs 24 im Mittenbereich und die langwelliges Licht abgebenden LEDs 21 bis 23 im Außenbereich der LED-Platine 20 angeordnet, da beispielsweise die roten Lichtstrahlen stärker gebrochen werden als blaue Lichtstrahlen. Die Anzahl und der genaue Typ der farbiges Licht abstrahlenden LEDs 22 bis 24 auf der LED-Platine 20 sind vorzugsweise auf eine vorgegebene feste Farbtemperatur, beispielsweise auf eine Farbtemperatur zwischen 2.800 °K und 6.500 °K, oder auf eine veränderliche Farbtemperatur in diesem Bereich abgestimmt.

Die LED-Platine 20 ist als ebene Kreisscheibenfläche ausgebildet und besteht insbesondere aus einer Metallkernplatine, Epoxydharzplatine oder Keramikplatine.

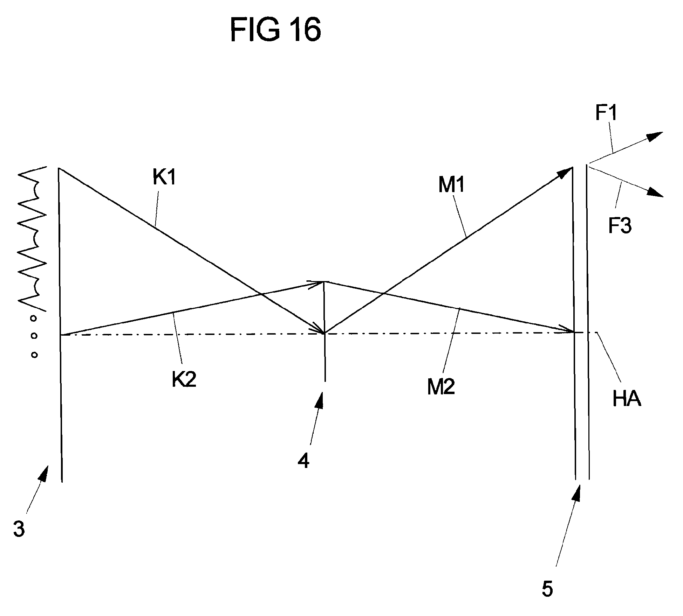

Fig. 16 zeigt in schematischer Darstellung den Strahlengang des LED-Scheinwerfers hinter dem optischen Interface 13 gemäß Fig. 13.

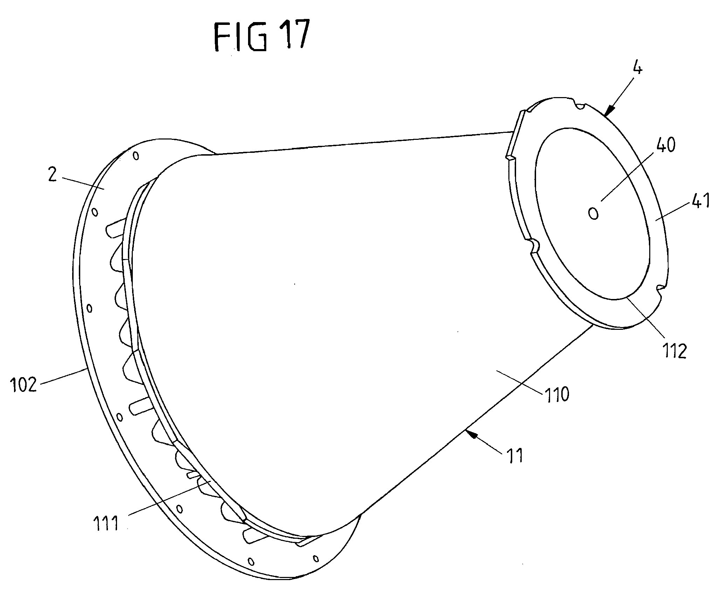

Fig. 17 zeigt in perspektivischer Ansicht den kegelstumpfförmigen Reflektor 11 mit der innen verspiegelten Mantelfläche 110 und der an die Kollimationsoptik 3 anschließenden offenen Grundfläche 111 und der die Mischoptik 4 aufnehmenden offenen Deckfläche 112, die mit der Öffnung 104 des kreisringförmigen Flansches 103 der Kartusche 10 übereinstimmt.

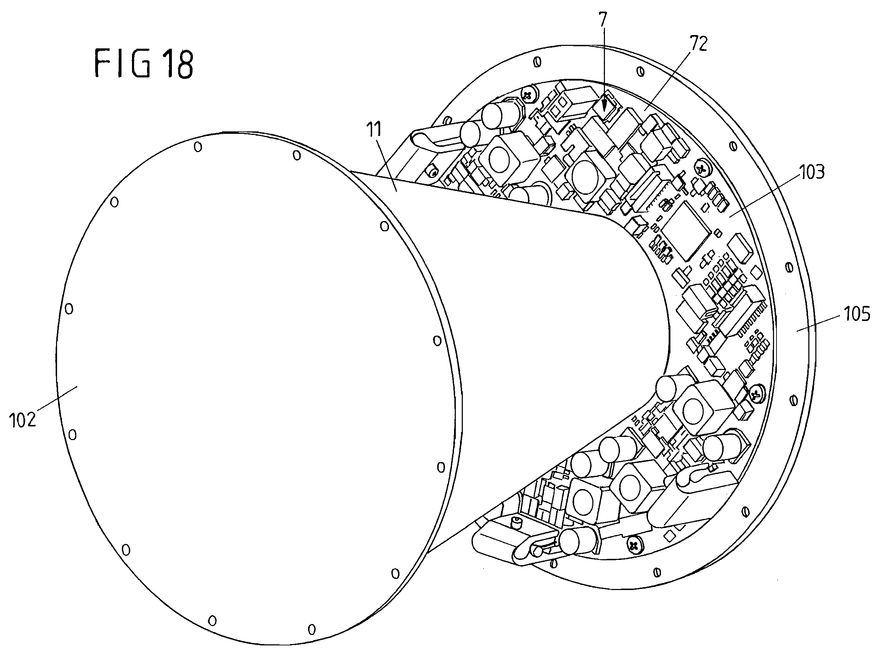

Fig. 18 zeigt in perspektivischer Ansicht aus der entgegen gesetzten Blickrichtung den kegelstumpfförmigen Reflektor 11 mit dem kreisringförmigen Flansch 103 der Kartusche 10, in dessen mit der offenen Deckfläche 112 des kegelstumpfförmigen Reflektors11 übereinstimmenden Öffnung 104 die Mischoptik 4 eingesetzt und mit ihrem Befestigungsrand 41 mit dem kreisringförmigen Flansch 103 verbunden ist, der einen umlaufenden Befestigungsrand 105 mit Bohrungen aufweist, an denen und an den Bohrungen der LED-Platine 20 bzw. der kreisscheibenförmigen Stirnfläche 102 der Kartusche 10 der Zylindermantel 101 der Kartusche 10 befestigt ist.

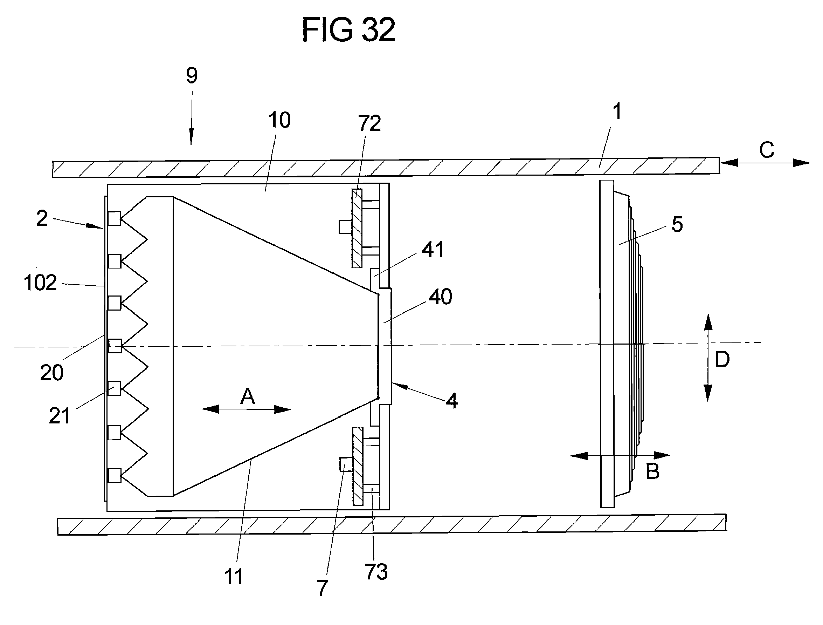

Der kreisringförmige Flansch 103 dient der Aufnahme der Steuerelektronik 7 zur Ansteuerung und Stromversorgung der auf der LED-Platine 20 angeordneten LEDs. Die Steuerelektronik 7 ist auf einer Kreisringplatine 71 angeordnet, die gemäß Fig. 32 über Stehbolzen 72 mit dem kreisringförmigen Flansch 103 verbunden ist. Die Außenfläche des kegelstumpfförmigen Reflektors 11, der Zylindermantel 101 der Kartusche 10 und die Innenseite des Ringflansches 103 umschließen einen hinreichend großen Raum zur Aufnahme der Steuerelektronik 7 und der von den Bauelementen der Steuerelektronik 7 abgegebenen Wärme.

Die als Stufenlinse ausgebildete Feldoptik 5 ist in Fig. 28 in einer Draufsicht auf die Lichtaustrittsseite, in Fig. 29 in einem Schnitt entlang der Linie A - A der Fig. 28 und in den Fig. 30 und 31 in einem perspektivischen Ausschnitt aus der Mitte der Lichteintrittsseite und vom Rand der Lichteintrittsseite der Stufenlinse dargestellt. Die Stufenlinse 5 weist auf der der Mischoptik 4 zugewandten Lichteintrittsseite eine Strukturierung 51 und auf der Lichtaustrittsseite eine Fresnelstruktur 52 auf. Wie der Darstellung gemäß den Fig. 30 und 31 zu entnehmen ist, besteht die Strukturierung 51 der Stufenlinse 5 aus einer Wabenstruktur mit spiralförmig angeordneten, fünfeckförmigen optischen Elementen, die gemäß Fig. 30 in der Mitte der Lichtaustrittsseite der Stufenlinse 5 stark strukturiert sind, während sie gemäß Fig. 31 am Rand der Lichtaustrittsseite der Stufenlinse 5 nur schwache Strukturen ausbilden.

Diese besondere Strukturierung der Lichteintrittsseite der Stufenlinse 5 beseitigt trotz der Licht mischenden Eigenschaften der Mischoptik 4 noch vorhandene Farbeffekte, so dass das aus den verschiedenfarbigen LEDs gemischte Licht homogen an das Fernfeld abgegeben wird. Bei einer ebenen Lichteintrittsseite der Stufenlinse 5 würde die örtliche Lichtverteilung auf der Lichtaustrittsseite des Kondensors der Mischoptik 4 in einer Winkelverteilung abgebildet werden, wobei nach dem Kondensor aufgrund seines Wirkungsprinzips die von den mehrfarbigen LEDs abgegebenen Farben nicht absolut homogen verteilt wären, so dass Farbeffekte auftreten würden.

Fig. 32 zeigt in schematischer Darstellung einen Längsschnitt durch einen LED-Scheinwerfer mit den vorstehend anhand der Fig. 12 bis 31 erläuterten Bauelemente des LED-Scheinwerfers, nämlich
- dem Tubus 1 des Scheinwerfergehäuses,
- der Lichterzeugungseinheit 9 mit der im Tubus 1 fest verankerten oder in Richtung des Doppelpfeils A innerhalb des Tubus 1 längsverschieblich angeordneten Kartusche 10, in der
   - die aktive Lichtquelle 2 mit der LED-Platine 20 und den LEDs 21 - 26,
   - die Kollimationsoptik 3,
   - der kegelstumpfförmige, innen verspiegelte Reflektor 11,
   - die als Kondensor ausgebildete Mischoptik 4 und
   - die Steuerelektronik 7
   angeordnet sind und
- der als Stufenlinse ausgebildeten Feldoptik 5, die entlang des Doppelpfeils B innerhalb des Scheinwerfergehäuses 1 beweglich angeordnet ist, um die gewünschte Lichtverteilung (Flood, Spot) einzustellen.

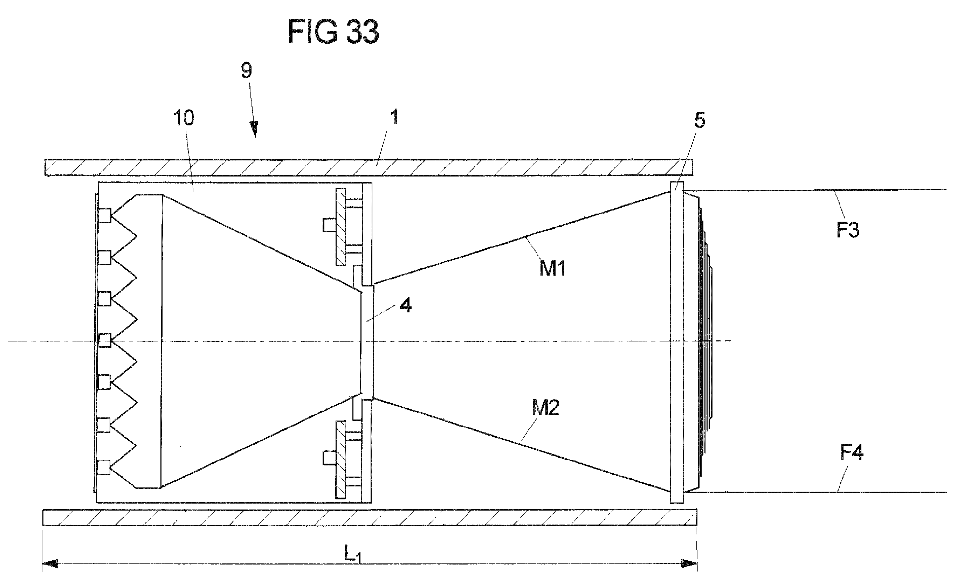

Fig. 32 zeigt auch die verschiedenen Verstell- bzw. Einstellmöglichkeiten für die Lichtverteilung des LED-Scheinwerfers. Der Doppelpfeil A deutet eine Längsverschiebung der Kartusche 10 und damit der Lichterzeugungseinheit 9 innerhalb des Tubus 1 des Scheinwerfers, der Doppelpfeil B eine Längsverstellung der Feldoptik bzw. Stufenlinse 5 innerhalb des Tubus 1, der Doppelpfeil C eine Längenfestlegung des Tubus 1 und der Doppelpfeil D eine Durchmesserbestimmung des Tubus 1 an. Um diese Ver- und Einstellmöglichkeiten zu verdeutlichen, sind in den Fig. 33 bis 36 Beispiele für die Lichtverteilung bei entsprechender Verstellung einzelner Bauteile des LED-Scheinwerfers für Spot- und Flood-Einstellungen des LED-Scheinwerfers dargestellt.

Fig. 33 zeigt die Lichtverteilung mit den Randstrahlen M1 und M2 zwischen der Mischoptik 4 und der Feldoptik 5 sowie der Abstrahlung der Feldoptik 5 ins Fernfeld mit den Randstrahlen F3 und F4 bei einer Spot-Einstellung, zu der die Feldoptik 5 in eine vordere Stellung innerhalb des Tubus 1 gebracht wurde. Die schematische Darstellung der Figur 33 zeigt, dass beim Verstellen der Feldoptik 5 innerhalb des Tubus 1 mit der Länge L₁ ein ungestörter Strahlengang in der Spot-Einstellung gegeben ist.

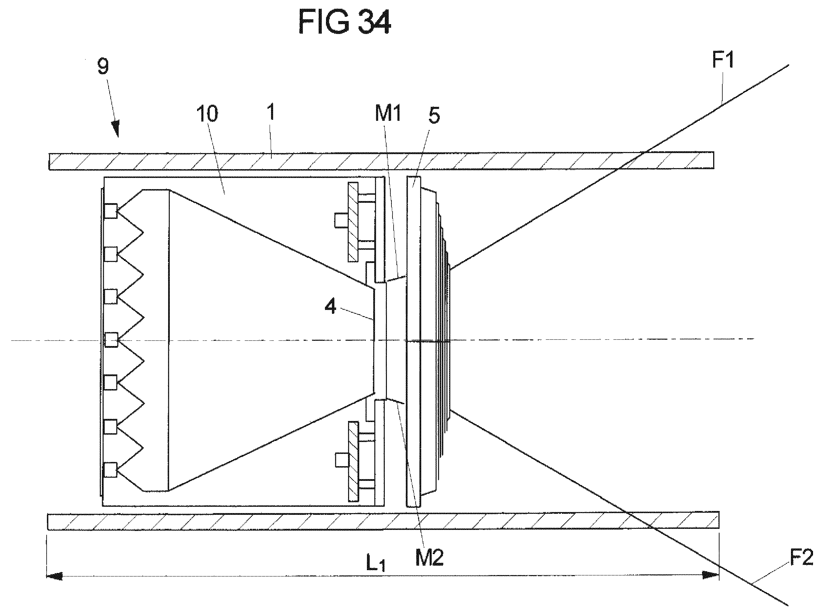

Bei der in Fig. 34 dargestellten Flood-Einstellung des Scheinwerfers, in der die Feldoptik 5 innerhalb des Tubus 1 mit der Länge L₁ dicht an die Mischoptik 4 herangefahren wird, ist der Strahlengang gestört, da bei unveränderter Länge L₁ des Tubus 1 die von der Feldoptik 5 abgegebenen äußeren Lichtstrahlen F1 und F2 auf den Tubus 1 treffen, so dass die Lichtverteilung abgeschnitten ist und keinen vollen Auslauf aufweist.

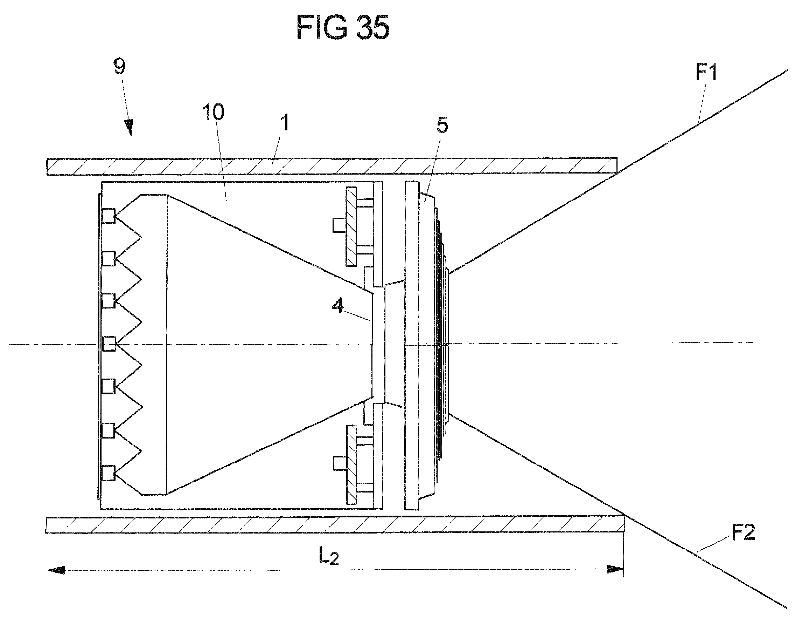

Durch Verkürzen des Tubus 1 gemäß Fig. 35 auf die Länge L₂ oder alternativ durch Vergrößern des Durchmessers D des Tubus 1 wird wieder ein ungestörter Strahlengang mit den Randstrahlen F1 und F2 in der Flood-Einstellung des LED-Scheinwerfers, in der die Feldoptik 5 nahe der Mischoptik 4 angeordnet ist, gewährleistet.

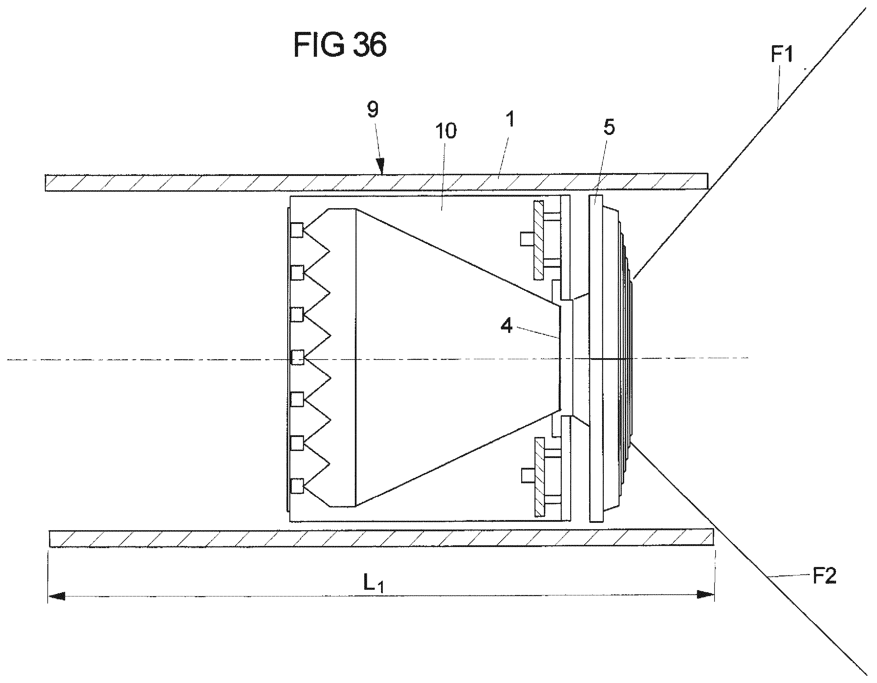

Alternativ kann gemäß Fig. 36 die Lichterzeugungseinheit 9 durch Verschieben der Kartusche 10 innerhalb des Tubus 1, dessen Länge L₁ gegenüber den Ausführungsbeispielen der Fig. 32 bis 34 unverändert ist, eine Flood-Einstellung mit ungestörtem Strahlengang der Randstrahlen F1 und F2 ohne Längen- oder Durchmesserveränderung des Tubus 1 erzielt werden.

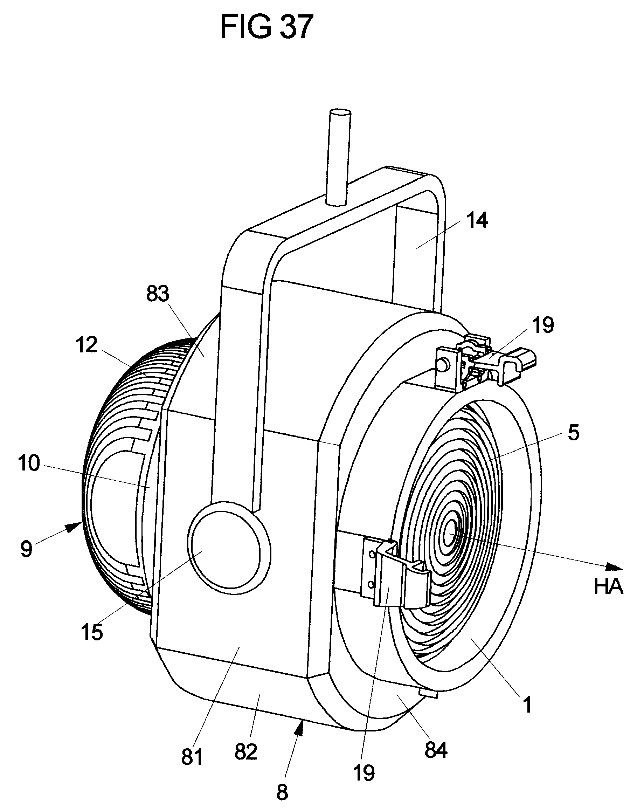

Fig. 37 zeigt in einer isometrischen Ansicht einen LED-Scheinwerfer mit einem Scheinwerfergehäuse 8 mit zwei parallelen Seitenflächen 81, einer teilzylinderförmigen Oberseite 83 und einer teilzylinderförmigen Unterseite 82. Innerhalb des Scheinwerfergehäuses 8 ist ein zylinderförmiger Tubus 1 angeordnet, der in Lichtabstrahlrichtung des LED-Scheinwerfers als Lichtaustrittskörper von der Vorderseite 84 des Scheinwerfergehäuses 8 absteht.

An den Seitenflächen 81 des Scheinwerfergehäuses 8 sind Drehgelenke 15 angebracht, die mit den Armen eines Haltebügels 14 zur Aufhängung des LED-Scheinwerfers verbunden sind. Alternativ können die Drehgelenke 15 mit einem Stativ bei stehender Anordnung des LED-Scheinwerfers verbunden werden. An der Außenfläche des Tubus 1 sind am Umfang verteilt Aufnahmen 19 für Scheinwerfer-Zubehör wie beispielsweise gegeneinander verschiebbare Linsenplatten, einem Flügeltor, einem Gitter, einem Diffuser, Scrims, Gobos, holografischen Streufolien oder dergleichen angeordnet, während in den Tubus 1 eine Feldlinse 5 eingesetzt ist.

In dem Tubus 1 sind eine die Lichterzeugungseinheit 9 enthaltende zylinderförmige Kartusche 10 und eine Lichtformeinrichtung in Form einer Feldlinse 5 angeordnet, die relativ zueinander beweglich sind, d.h. bei feststehender Feldlinse 5 ist die Kartusche 10 in Längsrichtung des Tubus 1 beweglich oder bei feststehender Kartusche 10 die Feldlinse 5 in Längsrichtung beweglich im Tubus 1 angeordnet. An die ein thermisches Interface bildende, der Lichtabstrahlrichtung des LED-Scheinwerfers abgewandten Rückseite der Kartusche 10 der Lichterzeugungseinheit 9 schließt sich ein halbkugelförmiger Körper 12 mit mehreren verteilt angeordneten Kühlrippen an.

In einer Ausgestaltung bilden das Scheinwerfergehäuse 8, die Feldlinse 5 und die Aufnahmen 19 für das Scheinwerfer-Zubehör eine feststehende Einheit, während die Kartusche 10 mit der Lichterzeugungseinheit 9 zur Veränderung des Abstrahlwinkels des LED-Scheinwerfers innerhalb des Tubus 1 entlang der optischen Achse HA zwischen einer Flood-Stellung zur Abstrahlung des Lichts mit einem großen Streuwinkel und harter Schattenbildung, in der sich die Lichterzeugungseinheit 9 nahe der Lichtaustrittsöffnung des LED-Scheinwerfers mit der Feldlinse 5 befindet, und einer Spot-Stellung zur Abstrahlung von Licht mit kleinem Streuwinkel und weicher Schattenbildung in einer von der Lichtaustrittsöffnung, d.h. der Feldlinse 5, entfernten Stellung verstellt werden kann.

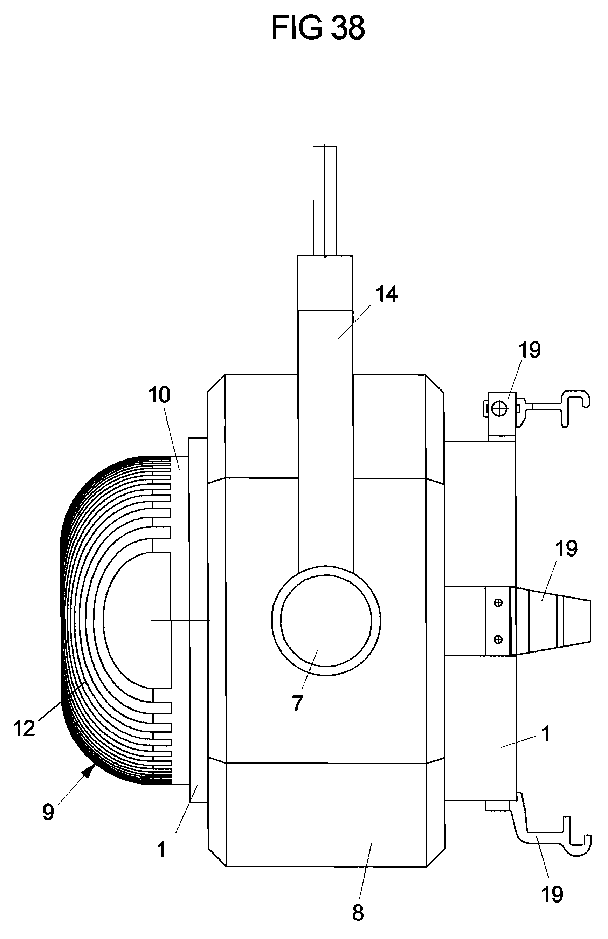

Fig. 38 zeigt in einer Seitenansicht den LED-Scheinwerfer gemäß Fig. 1 in der Flood-Stellung der Lichterzeugungseinheit 9 in der die Kartusche 10 der Lichterzeugungseinheit 3 nahezu vollständig in den Tubus 1 eingeschoben ist.

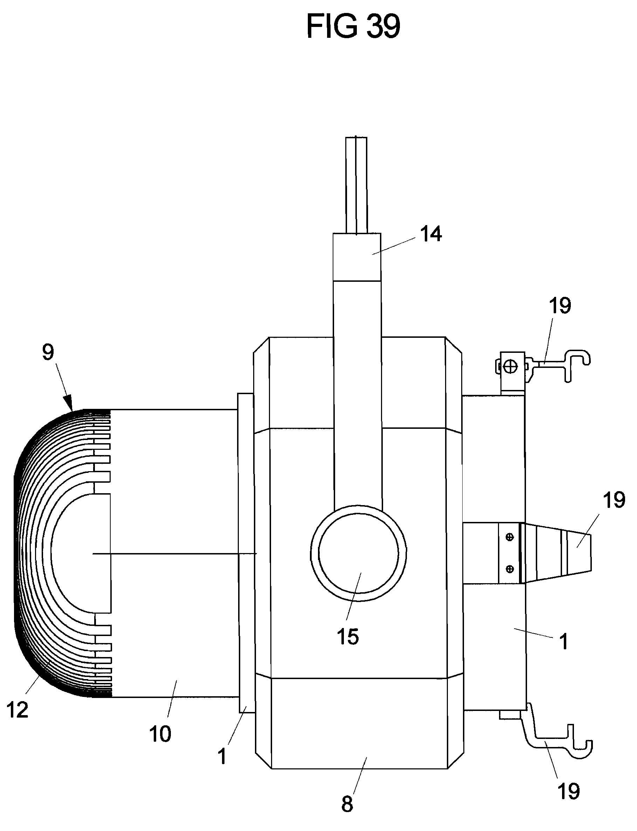

Fig. 39 zeigt die Lichterzeugungseinheit 9 in einer Spot-Stellung, in der die Kartusche 10 der Lichterzeugungseinheit 9 nahezu vollständig aus dem Tubus 1 herausgezogen ist, so dass sich die Lichterzeugungseinheit 9 in einer von der Lichtaustrittsöffnung des LED-Scheinwerfers und damit der Feldlinse 5 entfernten Stellung befindet.

### Bezugszeichenliste

- 1: Tubus
- 2: Aktive Lichtquelle ("Light Engine")
- 3: Kollimationsoptik
- 4: Mischoptik (Kondensor)
- 5: Feldoptik (Stufenlinse)
- 6: optische Elemente
- 7: Steuerelektronik
- 8: Scheinwerfergehäuse
- 9: Lichterzeugungseinheit
- 10: Kartusche
- 11: Kegelstumpfförmiger Reflektor
- 12: Thermisches Interface (Kühlkörper)
- 13: Optisches Interface
- 14: Haltebügel
- 15: Drehgelenk
- 16: Abstandshalter
- 18: Steuer- und Stromversorgungsleitung
- 19: Aufnahmen für Scheinwerfer-Zubehör
- 20: Ebene Fläche (Platine)
- 21-26: LEDs
- 27: Thermofühler (NTC-Widerstand)
- 30: Stufenlinsenstruktur (Fresnelstruktur)
- 31-36: Kollimationsoptiken
- 37: kegelförmige Totalreflexionslinsen
- 40: Optischer Bereich
- 41: Befestigungsrand
- 51: Lichteintrittsseite der Stufenlinse (spiralförmige Wabenstruktur)
- 52: Lichtaustrittsseite der Stufenlinse (Fresnelstruktur)
- 53, 53': Fünfeckförmige optische Elemente
- 60: Diffusorscheibe oder Diffusorkörper
- 61: voll lichtdurchlässiger Diffusor
- 62: verspiegelter Kegel
- 70: Stromversorgungs- oder Steuerkabel
- 71: Elektronisches Interface
- 72: Steuerelektronik-Platine
- 73: Stehbolzen
- 81: Seitenflächen des Scheinwerfergehäuses
- 82: teilzylinderförmige Unterseite des Scheinwerfergehäuses
- 83: teilzylinderförmige Oberseite des Scheinwerfergehäuses
- 84: Vorderseite des Scheinwerfergehäuses
- 91: Ebener Spiegel
- 92: Konkav gekrümmter Spiegel
- 93: Konvex gekrümmter Spiegel
- 94: Kombinierter Reflektor
- 101: Zylindermantel
- 102: Kreisscheibenförmige Stirnseite
- 103: Ringflansch
- 104: Öffnung
- 105: Befestigungsrand
- 106: Abgedichtete Öffnung
- 110: Mantelfläche
- 111: Grundfläche
- 112: Deckfläche
- 113: innen verspiegelter Reflektorabschnitt
- 181: Lichtquellen-Interface
- 182: Steuerelektronik-Interface
- 200: gekrümmte Fläche
- A: Abstrahlrichtung
- E: Lichtstrahlen auf der Eintrittsseite der Mischoptik
- F1-F4: Randlichtstrahlen auf der Austrittsseite der Feldoptik
- HA: Optische Hauptachse
- L1-4: LED-Lichtstrahlen
- M1, M2: Randlichtsstrahlen auf der Austrittsseite der Mischoptik
- N1, N2: Randlichtsstrahlen auf der Austrittsseite der optischen Elemente

## Patentansprüche

1. LED-Leuchte, insbesondere LED-Scheinwerfer, mit einer aktiven Lichtquelle (2) aus mehreren gleich- oder verschiedenfarbigen LEDs (21 bis 26), die auf einer ebenen oder gekrümmten Fläche oder LED-Platine (20, 200) angeordnet sind, und einem optischen System mit
- einer Kollimationsoptik (3), deren einzelne Linsen in geringem Abstand über den Abstrahlflächen der LEDs (21 bis 26) angeordnet sind und das von den LEDs abgestrahlte Licht (L1 bis L4) sammelt, bündelt und auf eine Fläche lenkt,
- einer Mischoptik (4), die das von der Kollimationsoptik (3) auf eine Fläche gelenkte und gebündelte Licht (K1, K2, E) aufnimmt und bzgl. der Farbe und/oder Helligkeit mischt und
- einer Feldoptik (5), die das von der Mischoptik (4) abgestrahlte Licht (M1, M2 bzw. N1, N2) aufnimmt und mit einer vorgegebenen Lichtverteilung (F1 -F4) in das Fernfeld abstrahlt.
**dadurch gekennzeichnet,**
**dass** die Kollimationsoptik (3) auf ihrer Lichteintrittsseite kegelförmige Totalreflexionslinsen (37), die jeweils unmittelbar vor einer LED (21 - 26) angeordnet und auf diese ausgerichtet sind, und auf ihrer Lichtaustrittsseite eine Stufenlinsenstruktur (30) nach Art einer Fresnellinse aufweist und die von den LEDs (21 - 26) abgegebenen Lichtstrahlen (L1 - L4) so umlenkt, dass sie die Lichteintrittsfläche der Mischoptik (4) im Wesentlichen vollständig mit Licht ausfüllen.

2. LED-Leuchte, insbesondere LED-Scheinwerfer, mit einer aktiven Lichtquelle (2) aus mehreren gleich- oder verschiedenfarbigen LEDs (21 bis 26), die auf einer ebenen oder gekrümmten Fläche oder LED-Platine (20, 200) angeordnet sind, und einem optischen System mit
- einer Kollimationsoptik (3), die in geringem Abstand über den Abstrahlflächen der LEDs (21 bis 26) angeordnet ist und das von den LEDs abgestrahlte Licht (L1 bis L4) sammelt, bündelt und auf eine Fläche lenkt,
- einer Mischoptik (4), die das von der Kollimationsoptik (3) auf eine Fläche gelenkte und gebündelte Licht (K1, K2, E) aufnimmt und bzgl. der Farbe und/oder Helligkeit mischt und
- einer Feldoptik (5), die das von der Mischoptik (4) abgestrahlte Licht (M1, M2 bzw. N1, N2) aufnimmt und mit einer vorgegebenen Lichtverteilung (F1 -F4) in das Fernfeld abstrahlt.
**dadurch gekennzeichnet,**
**dass** die Kollimationsoptik (3) aus diskreten optischen Elementen (31 - 35) besteht, die das von den auf einer ebenen Fläche (20) angeordneten LEDs (21 - 26) in der gleichen Abstrahlrichtung abgestrahlte Licht (L1 - L4) auf eine entfernte Fläche bündeln, wobei die LEDs (21 - 24) mit den optischen Elementen (31 - 35) auf einer Platine (20) angeordnet sind, die sich in der Ebene der Mischoptik (4) befindet und in einem zentralen Bereich die Mischoptik (4) aufnimmt oder umgibt, und dass die von den oder optischen Elementen (31 - 35) abgegebenen Lichtstrahlen (K1, K2) auf einen Reflektor (91, 92) gerichtet sind, der die Lichtstrahlen (K1, K2) auf die Mischoptik (4) zurückwirft, die das gemischte Licht (M1, M2) entgegen der Abstrahlrichtung der LEDs (21 - 24) abgibt.

3. LED-Leuchte nach Anspruch 2, **dadurch gekennzeichnet, dass** der Reflektor aus einem von der Platine (20) beabstandeten, konkav gekrümmten oder kegelförmigen und vorzugsweise facettierten Spiegel (92) besteht.

4. LED-Leuchte nach Anspruch 2 oder 3, **gekennzeichnet durch** winkelablenkende und geradlinig abstrahlende Kollimationselemente (31 - 34), deren Lichtstrahlen auf einen Reflektor (93, 94) mit einer ebenen oder gekrümmten Spiegelfläche gerichtet sind, der die Lichtstrahlen zur Mischoptik (4) zurückspiegelt.

5. LED-Leuchte nach mindestens einem der Ansprüche 2 bis 4, **gekennzeichnet durch** einen konvex gekrümmten oder kegelförmigen, vorzugsweise facettierten Reflektor (93, 94) und in einem Ring, mehreren Ringen oder einer polygonalen Außenhülle um die optische Hauptachse (HA) der LED-Leuchte angeordnete LEDs (21 - 26) und Kollimationsoptiken (31 - 36).

6. LED-Leuchte nach mindestens einem der Ansprüche 2 bis 5, **gekennzeichnet durch** in einem Ring, mehreren Ringen oder einer polygonalen Außenhülle um die optische Hauptachse (HA) der LED-Leuchte sowie auf einer sich in der Ebene der Mischoptik (4) befindende und die Mischoptik (4) in einem zentralen Bereich aufnehmende oder umgebende Platine (20) angeordnete LEDs (21 - 26) und Kollimationselementen (31 - 36) und einen ebenen Reflektor bei Verwendung von ablenkenden Kollimationselementen (31 - 36) und einen konkaven Reflektor (94) bei gerade abstrahlenden Kollimationselementen (31 - 36).

7. LED-Leuchte nach Anspruch 1 oder 2, **dadurch gekennzeichnet, dass** die Kollimationsoptik (3) als Optik-Platte ausgebildet ist, in die optische Flächen mit unterschiedlicher Abstrahlrichtung eingearbeitet sind.

8. LED-Leuchte nach mindestens einem der vorangehenden Ansprüche, **dadurch gekennzeichnet, dass** die Mischoptik (4) das aus verschiedenen Richtungen auftreffende Licht mit etwa dem gleichen Winkel abstrahlt und mindestens ein optisches Element aufweist, welches das in Abstrahlrichtung (A) von der der Kollimationsoptik (3) abgestrahlte Licht (K1, K2; E) mischt und so an der Lichtaustrittsseite als sekundäre Lichtquelle wirksam ist.

9. LED-Leuchte nach Anspruch 8, **dadurch gekennzeichnet, dass** die Mischoptik (4) aus einem als Scheibe oder Körper ausgebildeten Diffusor (60, 61) mit vorgebbarem Streuungsgrad oder aus einer transluzenten Glasscheibe, insbesondere aus einer diffusen Kunststoffscheibe oder diffusen Halbkugel aus Kunststoff, besteht.

10. LED-Leuchte nach Anspruch 8, **dadurch gekennzeichnet, dass** die Mischoptik (4) auf der Lichteintrittsseite und/oder der Lichtaustrittsseite eine aus Waben, Prismen oder Mikrolinsen bestehende Struktur aufweist oder aus einem Lichtmischstab oder Taper besteht.

11. LED-Leuchte nach mindestens einem der vorangehenden Ansprüche, **dadurch gekennzeichnet, dass** zwischen der aktiven Lichtquelle (2) und der Mischoptik (4) als Linsen, Linsensysteme und/oder Reflektoren ausgebildete optische Elemente (6) angeordnet sind, die das Licht derart umlenken oder umformen, dass es in vorgebbarer Weise an die Mischoptik (4) abgegeben wird.

12. LED-Leuchte nach mindestens einem der vorangehenden Ansprüche, **dadurch gekennzeichnet, dass** die Feldoptik (5) aus
- einer Sammellinse, insbesondere aus einer Konvexlinse, einer Plan-Konvexlinse oder einer asphärischen Sammellinse, deren Ein- und Austrittsseiten vorzugsweise eine Struktur, insbesondere eine Waben-, Prismen- oder Mikrolinsenstruktur, aufweisen oder
- einer Stufenlinse, insbesondere aus einer Stufenlinse mit eingearbeiteter Streustruktur (NOFS-Linse) oder
- einem vorzugsweise als Zoom- oder Projektionsoptik ausgebildeten Linsensystem mit vorwiegend abbildenden Eigenschaften, das die Austrittsfläche der Mischoptik (4) oder eine davor liegende Ebene exakt in eine weit entfernt liegende Ebene abbildet,
besteht.

13. LED-Leuchte nach Anspruch 12, **dadurch gekennzeichnet, dass** die Feldlinse bzw. Feldoptik auf der Lichteintrittsseite eine Strahl-Aufweitungsstruktur und auf der Lichtaustrittsseite eine fokussierende Struktur, insbesondere eine Fresnel-Struktur besitzt.

14. LED-Leuchte nach mindestens einem der vorangehenden Ansprüche, **dadurch gekennzeichnet, dass** zwischen der Mischoptik (4) und der Feldoptik (5) als Linsen, Linsensysteme und/oder Reflektoren ausgebildete optische Elemente (6) angeordnet sind, die das Licht derart umlenken oder umformen, dass im Fernfeld eine vorgegebene Lichtverteilung entsteht.

15. LED-Leuchte nach mindestens einem der vorangehenden Ansprüche, **gekennzeichnet durch** einen kegelstumpfförmigen Reflektor (11), dessen Mantelfläche (110) innen verspiegelt ist, dessen offene Grundfläche (111) an die Kollimationsoptik (3) anschließt und dessen offene Deckfläche die Mischoptik (4) aufnimmt oder an sie angrenzt.

16. LED-Leuchte nach mindestens einem der vorangehenden Ansprüche, **dadurch gekennzeichnet, dass** die LED-Platine (20) eine Vielzahl LEDs (21 - 26) und mehrere, verteilt angeordnete Thermofühler (27) aufweist, die die Temperatur auf der LED-Platine (20) in unterschiedlichen Temperaturzonen erfassen.

17. LED-Leuchte nach mindestens einem der vorangehenden Ansprüche, **gekennzeichnet durch** einen im Strahlengang des von den LEDs (21 - 26) abgegebenen Lichts angeordneten optischen Sensor, insbesondere eine Photodiode, ein Farbsensor oder Minispektrometer, dessen Ausgangssignal als Eingangssignal an die Steuerelektronik (7) zur Regelung der Helligkeit und/oder Farbe des von den LEDs (21 - 26) abgestrahlten Lichts auf vorgegebene Werte abgegeben wird.

18. LED-Leuchte nach Anspruch 16 oder 17, **dadurch gekennzeichnet, dass** in Lichtabstrahlrichtung der LED-Leuchte vor der Mischoptik (4) eine entlang der optischen Achse (HA) der LED-Leuchte verstellbare Stufenlinse (5) angeordnet ist, die das von der Mischoptik (4) abgestrahlte Licht aufnimmt und mit durch den Abstand der Stufenlinse (5) von der Mischoptik (4) einstellbarer Lichtverteilung (Flood, Spot) in ein Fernfeld abstrahlt.

19. LED-Leuchte nach Anspruch 18, **dadurch gekennzeichnet, dass** die Stufenlinse (5) im Tubus (1) in Richtung der optischen Achse (HA) der LED-Leuchte verstellbar ist.

20. LED-Leuchte nach mindestens einem der vorangehenden Ansprüche 16 bis 19, **dadurch gekennzeichnet, dass** die Mischoptik (4) in der Öffnung (104) eines Ringflansches (103) angeordnet ist, dessen Außendurchmesser gleich dem Außendurchmesser der LED-Platine (20) und/oder einer mit der LED-Platine (20) verbundenen kreisscheibenförmigen Platte (101) ist, dass der Ringflansch (103) einerseits und die LED-Platine (20) oder die kreisscheibenförmige Platte (101) andererseits die Stirnseiten einer hohlzylinderförmigen Kartusche (10) bilden, deren Zylindermantel (101) mit dem Ringflansch (103) und der LED-Platine (20) und/oder der kreisscheibenförmigen Platte (101) verbunden ist, dass die Kartusche (10) und die Stufenlinse (5) in einem Tubus (1) des Leuchten- oder Scheinwerfergehäuses angeordnet sind und dass
- die Stufenlinse (5) und der Tubus (1) in Richtung der optischen Achse (HA) der LED-Leuchte oder
- die Stufenlinse (5) und der Tubus (1) in Richtung der optischen Achse (HA) der LED-Leuchte gegenüber der Kartusche (10) oder
- die Stufenlinse (5) mit dem Tubus (1) verbunden ist und die Kartusche (10) entlang der optischen Achse (HA) der LED-Leuchte gegenüber dem Tubus (1) verstellbar ist/sind.

21. LED-Leuchte nach mindestens einem der vorangegangenen Ansprüche, **dadurch gekennzeichnet, dass** zumindest ein Teil des von den LEDs abgestrahlten Lichts durch einen Farbfilter gelenkt wird, so dass das Spektrum des vom Scheinwerfer abgestrahlten Lichts in einer vorgebbaren Weise verändert wird, wobei die Kombination aus der spektralen Abstrahlcharakteristik der LEDs und der spektralen Transmission des Farbfilters, insbesondere einer Farbfolie, das vom Scheinwerfer abgestrahlte Licht farblich so optimiert, dass damit ein gewünschter Farbort und/oder eine gewünschte Farbwiedergabe bei maximaler Helligkeit erreicht werden.

22. LED-Leuchte nach mindestens einem der vorangehenden Ansprüche, **dadurch gekennzeichnet, dass** die aktive Lichtquelle (2) mehrere auf der Innenseite einer aus einer hohlen Teil- oder Halbkugel, einer Hohlparabel oder einer asphärischen Hohlfläche bestehenden gekrümmten Fläche (200) angeordnete LEDs (21 - 26) aufweist, die Licht zum Krümmungsmittelpunkt oder Brennpunkt der gekrümmten Fläche (200) abstrahlen und dass für mehrere oder sämtliche LEDs (21 - 26) der aktiven Lichtquelle (2) die gleiche Kollimationsoptik (3) vorgesehen ist.

## Claims

1. LED luminaire, in particular LED spotlight, comprising an active light source (2) composed of a plurality of identically or differently coloured LEDs (21 to 26) which are arranged on a planar or curved surface or LED circuit board (20, 200), and an optical system comprising
- a collimation optical unit (3), the individual lenses of which are arranged at a small distance above the emission surfaces of the LEDs (21 to 26) and which collects and focuses the light (L1 to L4) emitted by the LEDs and directs it onto a surface,
- a mixing optical unit (4), which receives the light (K1, K2, E) focused and directed onto a surface by the collimation optical unit (3) and mixes it with regard to the colour and/or brightness, and
- a field optical unit (5), which receives the light (M2, M2 or N1, N2) emitted by the mixing optical unit (4) and emits it with a predefined light distribution (F1-F4) into the far field,
**characterized**
**in that** the collimation optical unit (3) has on its light entrance side conical total internal reflection lenses (37), which are in each case arranged directly in front of an LED (21-26) and aligned therewith, and on its light exit side a stepped lens structure (30) in the manner of a Fresnel lens and deflects the light beams (L1-L4) emitted by the LEDs (21-26) such that they fill the light entrance surface of the mixing optical unit (4) substantially completely with light.

2. LED luminaire, in particular LED spotlight, comprising an active light source (2) composed of a plurality of identically or differently coloured LEDs (21 to 26) which are arranged on a planar or curved surface or LED circuit board (20, 200), and an optical system comprising
- a collimation optical unit (3), which is arranged at a small distance above the emission surfaces of the LEDs (21 to 26) and which collects and focuses the light (L1 to L4) emitted by the LEDs and directs it onto a surface,
- a mixing optical unit (4), which receives the light (K1, K2, E) focused and directed onto a surface by the collimation optical unit (3) and mixes it with regard to the colour and/or brightness, and
- a field optical unit (5), which receives the light (M2, M2 or N1, N2) emitted by the mixing optical unit (4) and emits it with a predefined light distribution (F1-F4) into the far field,
**characterized**
**in that** the collimation optical unit (3) consists of discrete optical elements (31-35) which focus the light (L1-L4) emitted in the same emission direction by the LEDs (21-26) arranged on a planar surface (20) onto a remote surface, wherein the LEDs (21-24) are arranged with the optical elements (31-35) on a circuit board (20) which is situated in the plane of the mixing optical unit (4) and receives or surrounds the mixing optical unit (4) in a central region, and in that the light beams (K1, K2) emitted by the optical elements (31-35) are directed onto a reflector (91, 92), which reflects the light beams (K1, K2) onto the mixing optical unit (4), which emits the mixed light (M1, M2) counter to the emission direction of the LEDs (21-24).

3. LED luminaire according to Claim 2, **characterized in that** the reflector consists of a concavely curved or conical and preferably faceted mirror (92) spaced apart from the circuit board (20).

4. LED luminaire according to Claim 2 or 3, **characterized by** angularly deflecting and rectilinearly emitting collimation elements (31-34), the light beams of which are directed onto a reflector (93, 94) having a planar or curved mirror surface, which reflector reflects the light beams back to the mixing optical unit (4).

5. LED luminaire according to at least one of Claims 2 to 4, **characterized by** a convexly curved or conical, preferably faceted reflector (93, 94) and LEDs (21-26) and collimation optical units (31-36) arranged in one ring, a plurality of rings or a polygonal outer shell around the principal optical axis (HA) of the LED luminaire.

6. LED luminaire according to at least one of Claims 2 to 5, **characterized by** LEDs (21-26) and collimation elements (31-36) arranged in one ring, a plurality of rings or a polygonal outer shell around the principal optical axis (HA) of the LED luminaire and on a circuit board (20) situated in the plane of the mixing optical unit (4), said circuit board receiving or surrounding the mixing optical unit (4) in a central region, and a planar reflector with the use of deflecting collimation elements (31-36) and a concave reflector (94) in the case of collimation elements (31-36) exhibiting straight emission.

7. LED luminaire according to Claim 1 or 2, **characterized in that** the collimation optical unit (3) is embodied as an optical plate into which optical surfaces having different emission directions are incorporated.

8. LED luminaire according to at least one of the preceding claims, **characterized in that** the mixing optical unit (4) emits the light impinging from different directions with approximately the same angle and has at least one optical element which mixes the light (K1, K2; E) emitted by the collimation optical unit (3) in the emission direction (A) and is thus effective as a secondary light source at the light exit side.

9. LED luminaire according to Claim 8, **characterized in that** the mixing optical unit (4) consists of a diffusor (60, 61) embodied as a sheet or body and having a predefinable degree of diffusion, or consists of a translucent glass sheet, in particular of a diffuse plastic sheet or diffuse hemisphere composed of plastic.

10. LED luminaire according to Claim 8, **characterized in that** the mixing optical unit (4), on the light entrance side and/or light exit side, has a structure consisting of honeycombs, prisms or microlenses or consists of a light mixing rod or taper.

11. LED luminaire according to at least one of the preceding claims, **characterized in that** optical elements (6) embodied as lenses, lens systems and/or reflectors are arranged between the active light source (2) and the mixing optical unit (4) and deflect or reshape the light in such a way that it is emitted to the mixing optical unit (4) in a predefinable manner.

12. LED luminaire according to at least one of the preceding claims, **characterized in that** the field optical unit (5) consists of
- a converging lens, in particular a convex lens, a planoconvex lens or an aspherical converging lens, the entrance and exit sides of which preferably have a structure, in particular a honeycomb, prism or microlens structure, or
- a stepped lens, in particular a stepped lens having an incorporated diffusing structure (NOFS lens), or
- a lens system having predominantly imaging properties, which is preferably embodied as a zoom or projection optical unit and which images the exit surface of the mixing optical unit (4) or a plane situated in front thereof exactly into a plane situated far away.

13. LED luminaire according to Claim 12, **characterized in that** the field lens or field optical unit has a beam expanding structure on the light entrance side and a focusing structure, in particular a Fresnel structure, on the light exit side.

14. LED luminaire according to at least one of the preceding claims, **characterized in that** optical elements (6) embodied as lenses, lens systems and/or reflectors are arranged between the mixing optical unit (4) and the field optical unit (5) and deflect or reshape the light in such a way that a predefined light distribution arises in the far field.

15. LED luminaire according to at least one of the preceding claims, **characterized by** a frustoconical reflector (11), the lateral surface (110) of which is reflectively coated on the inside, the open face surface (111) of which is adjacent to the collimation optical unit (3) and the open top surface of which receives or adjoins the mixing optical unit (4).

16. LED luminaire according to at least one of the preceding claims, **characterized in that** the LED circuit board (20) has a multiplicity of LEDs (21-26) and a plurality of thermal sensors (27) arranged in a distributed fashion, which detect the temperature on the LED circuit board (20) in different temperature zones.

17. LED luminaire according to at least one of the preceding claims, **characterized by**, arranged in the beam path of the light emitted by the LEDs (21-26), an optical sensor, in particular a photodiode, a colour sensor or minispectrometer, the output signal of which is emitted as input signal to the control electronics (7) for regulating the brightness and/or colour of the light emitted by the LEDs (21-26) to predefined values.

18. LED luminaire according to Claim 16 or 17, **characterized in that** a stepped lens (5) adjustable along the optical axis (HA) of the LED luminaire is arranged in front of the mixing optical unit (4) in the light emission direction of the LED luminaire, which stepped lens receives the light emitted by the mixing optical unit (4) and emits it with a light distribution (flood, spot) that is settable by the distance between the stepped lens (5) and the mixing optical unit (4) into a far field.

19. LED luminaire according to Claim 18, **characterized in that** the stepped lens (5) is adjustable in the tube (1) in the direction of the optical axis (HA) of the LED luminaire.

20. LED luminaire according to at least one of the preceding Claims 16 to 19, **characterized in that** the mixing optical unit (4) is arranged in the opening (104) of an annular flange (103), the external diameter of which is equal to the external diameter of the LED circuit board (20) and/or of a circular-disc-shaped plate (101) connected to the LED circuit board (20), **in that** the annular flange (103), on the one hand, and the LED circuit board (20) or the circular-disc-shaped plate (101), on the other hand, form the end sides of a hollow-cylindrical cartridge (10), the cylinder lateral surface (101) of which is connected to the annular flange (103) and the LED circuit board (20) and/or the circular-disc-shaped plate (101), **in that** the cartridge (10) and the stepped lens (5) are arranged in a tube (1) of the luminaire housing or spotlight housing, and **in that**
- the stepped lens (5) and the tube (1) are adjustable in the direction of the optical axis (HA) of the LED luminaire or
- the stepped lens (5) and the tube (1) are adjustable in the direction of the optical axis (HA) of the LED luminaire relative to the cartridge (10) or
- the stepped lens (5) is connected to the tube (1) and the cartridge (10) is adjustable along the optical axis (HA) of the LED luminaire relative to the tube (1).

21. LED luminaire according to at least one of the preceding claims, **characterized in that** at least part of the light emitted by the LEDs is directed through a colour filter, such that the spectrum of the light emitted by the spotlight is altered in a predefinable manner, wherein the combination of the spectral emission characteristic of the LEDs and the spectral transmission of the colour filter, in particular of a colour film, optimizes the light emitted by the spotlight in terms of colour so as thus to achieve a desired colour locus and/or a desired colour rendering with maximum brightness.

22. LED luminaire according to at least one of the preceding claims, **characterized in that** the active light source (2) has a plurality of LEDs (21-26) arranged on the inner side of a curved surface (200) consisting of a hollow partial sphere or hemisphere, a concave parabola or an aspherical hollow surface, which LEDs emit light to the centre of curvature or focal point of the curved surface (200), and **in that** the same collimation optical unit (3) is provided for a plurality or all of the LEDs (21-26) of the active light source (2).

## Revendications

1. Lampe à DEL, en particulier phare à DEL, comprenant une source de lumière active (2) constituée de plusieurs DEL de couleurs identiques ou différentes (21 à 26), qui sont agencées sur une surface ou platine DEL plane ou incurvée (20, 200), et un système optique comprenant
- une optique de collimation (3), dont les lentilles individuelles sont agencées sur les surfaces de rayonnement des DEL (21 à 26) à faible distance et qui collecte et concentre la lumière (L1 à L4) émise par les DEL et la guide sur une surface,
- une optique de mélange (4), qui reçoit la lumière (K1, K2, E) guidée et concentrée par l'optique de collimation (3) sur une surface et en mélange quant à la couleur et /ou la luminosité et
- une optique de champ (5), qui reçoit la lumière (M1, M2 ou N1, N2) émise par l'optique de mélange (4) et la diffuse dans la zone de champ lointain avec une distribution de lumière prédéterminée (FI à F4),
**caractérisée en ce que**
l'optique de collimation (3) présente, sur son côté d'entrée de lumière, des lentilles de réflexion totale coniques (37), qui sont agencées respectivement directement devant une DEL (21 à 26) et sont orientées sur celle-ci et, sur son côté de sortie de lumière, une structure de lentille étagée (30) du type lentille de Fresnel et change la direction des rayons lumineux (L1 à L4) délivrés par les DEL (21 à 26) de sorte qu'ils remplissent en substance complètement de lumière la surface d'entrée de lumière de l'optique de mélange (4).

2. Lampe à DEL, en particulier phare à DEL, comprenant une source de lumière active (2) constituée de plusieurs DEL de couleurs identiques ou différentes (21 à 26), qui sont agencées sur une surface ou platine DEL plane ou incurvée (20, 200), et un système optique comprenant
- une optique de collimation (3), agencée sur les surfaces de rayonnement des DEL (21 à 26) à faible distance et qui collecte la lumière (L1 à L4) émise par les DEL, la concentre et la guide sur une surface,
- une optique de mélange (4), qui reçoit la lumière (K1, K2, E) guidée et concentrée par l'optique de collimation (3) sur une surface et en mélange quant à la couleur et /ou la luminosité et
- une optique de champ (5), qui reçoit la lumière (M1, M2 ou N1, N2) émise par l'optique de mélange (4) et qui la diffuse dans la zone de champ lointain avec une distribution de lumière prédéterminée (FI à F4),
**caractérisée en ce que**
l'optique de collimation (3) est constituée d'éléments optiques discrets (31 à 35), qui concentrent sur une surface distante la lumière (L1 à L4) émise par les DEL (21 à 26) agencées sur une surface plane (20) dans la même direction de rayonnement, les DEL (21 à 24) étant agencées avec les éléments optiques (31 à 35) sur une platine (20) qui se trouve dans le plan de l'optique de mélange (4) et reçoit ou entoure dans une zone centrale l'optique de mélange (4), et **en ce que** les rayons lumineux (K1, K2) délivrés par les éléments optiques (31 à 35) sont dirigés sur un réflecteur (91, 92) qui réfléchit les rayons lumineux (K1, K2) sur l'optique de mélange (4), qui délivre la lumière mixte (M1, M2) à l'encontre du sens de rayonnement des DEL (21 à 24).

3. Lampe à DEL selon la revendication 2, **caractérisée en ce que** le réflecteur est constitué d'un miroir (92) distant de la platine (20), à courbure concave ou conique et de préférence à facettes.

4. Lampe à DEL selon la revendication 2 ou 3, **caractérisée par** des éléments de collimation rayonnant par déviation angulaire et en ligne droite (31 à 34), dont les rayons lumineux sont dirigés sur un réflecteur (93, 94) pourvu d'une surface de miroir plane ou incurvée qui réfléchit les rayons lumineux vers l'optique de mélange (4).

5. Lampe à DEL selon au moins l'une des revendications 2 à 4, **caractérisée par** un réflecteur à courbure convexe ou conique, de préférence à facettes (93, 94) et des DEL (21 à 26) et des optiques de collimation (31 à 36) agencées sur un anneau, sur plusieurs anneaux ou dans une coque externe polygonale autour de l'axe optique principal (HA) de la lampe à DEL.

6. Lampe à DEL selon au moins l'une des revendications 2 à 5, **caractérisée par** des DEL (21 à 26) et des éléments de collimation (31 à 36) agencés sur un anneau, sur plusieurs anneaux ou dans une coque externe polygonale autour dudit axe optique principal (HA) de la lampe à DEL ainsi que sur une platine (20) se trouvant dans le plan de l'optique de mélange (4) et recevant ou entourant l'optique de mélange (4) dans une zone centrale, et un réflecteur plan lors de l'utilisation d'éléments de collimation déviateurs (31 à 36) et un réflecteur concave (94) dans le cas d'éléments de collimation à rayonnement droit (31 à 36).

7. Lampe à DEL selon la revendication 1 ou 2, **caractérisée en ce que** l'optique de collimation (3) est conformée en plaque optique dans laquelle des surfaces optiques sont incorporées avec une direction de rayonnement différente.

8. Lampe à DEL selon au moins l'une des revendications précédentes, **caractérisée en ce que** l'optique de mélange (4) émet la lumière arrivant de diverses directions avec plus ou moins le même angle et présente au moins un élément optique qui mélange la lumière (K1, K2 ; E) émise dans la direction de rayonnement (A) de l'optique de collimation (3) et s'avère ainsi efficace comme source de lumière secondaire du côté de sortie de la lumière.

9. Lampe à DEL selon la revendication 8, **caractérisé en ce que** l'optique de mélange (4) est constituée d'un diffuseur (60, 61) conçu sous forme de disque ou de corps avec un degré de dispersion prédéterminable ou d'un disque de verre translucide, en particulier d'un disque de matière plastique diffus ou d'un hémisphère diffus en matière plastique.

10. Lampe à DEL selon la revendication 8, **caractérisée en ce que** l'optique de mélange (4) présente, du côté d'entrée de la lumière et/ou du côté de sortie de la lumière, une structure constituée de nid d'abeille, de prismes ou de microlentilles ou est constituée d'une tige ou d'une queue de mélange lumineux.

11. Lampe à DEL selon au moins l'une des revendications précédentes, **caractérisée en ce que** sont agencés entre la source de lumière active (2) et l'optique de mélange (4) des éléments optiques (6) conçus sous forme de lentilles, de systèmes de lentilles et/ou de réflecteurs, qui dévient ou transforment la lumière de sorte qu'elle soit délivrée à l'optique de mélange (4) de manière prédéterminable.

12. Lampe à DEL selon au moins l'une des revendications précédentes, **caractérisée en ce que** l'optique de champ (5) est constituée
- d'une lentille convergente, en particulier d'une lentille convexe, d'une lentille plan-convexe ou d'une lentille convergente asphérique, dont les côtés d'entrée et de sortie présentent de préférence une structure, en particulier une structure en nid d'abeille, en prismes ou en structure de microlentilles ou
- d'une lentille étagée, en particulier d'une lentille étagée avec une structure de dispersion incorporée (lentille NOFS) ou
- d'un système de lentilles conçu de préférence sous la forme d'une optique de zoom ou de projection avec des propriétés représentatives, qui forme la surface de sortie de l'optique de mélange (4) ou un plan qui se trouve devant celle-ci exactement dans un plan qui est largement éloigné.

13. Lampe à DEL selon la revendication 12, **caractérisé en ce que** la lentille de champ ou l'optique de champ possède, sur le côté d'entrée de la lumière, une structure d'expansion de rayons et, du côté de sortie de la lumière, une structure focalisatrice, en particulier une structure de Fresnel.

14. Lampe à DEL selon au moins l'une des revendications précédentes, **caractérisée en ce que** sont agencés entre l'optique de mélange (4) et l'optique de champ (5) des éléments optiques (6) conçus sous la forme de lentilles, de systèmes de lentilles et/ou de réflecteurs, qui dévient ou transforment la lumière de sorte que se produise en champ lointain une distribution de lumière prédéterminée.

15. Lampe à DEL selon au moins l'une des revendications précédentes, **caractérisée par** un réflecteur de forme tronconique (11), dont la surface d'enveloppe (110) est réfléchissante à l'intérieur, dont la surface de base ouverte (111) se raccorde à l'optique de collimation (3) et dont la surface de recouvrement ouverte reçoit l'optique de mélange (4) ou délimite celui-ci.

16. Lampe à DEL selon au moins l'une des revendications précédentes, **caractérisée en ce que** la platine DEL (20) présente une pluralité de DEL (21 à 26) et plusieurs capteurs thermiques (27) agencés de manière distribuée, qui enregistrent la température sur la platine DEL (20) dans des zones de température différentes.

17. Lampe à DEL selon au moins l'une des revendications précédentes, **caractérisée par** un capteur optique agencé dans la voie de rayonnement de la lumière délivrée par les DEL (21 à 26), en particulier une photodiode, un capteur de couleur ou un mini-spectromètre, dont le signal de sortie est délivré sous la forme d'un signal d'entrée dans l'électronique de commande (7) pour réguler la luminosité et/ou la couleur de la lumière émise par les DEL (21 à 26) à des valeurs prédéterminées.

18. Lampe à DEL selon la revendication 16 ou 17, **caractérisée en ce qu'**est agencée dans la direction de rayonnement lumineux de la lampe à DEL devant l'optique de mélange (4) une lentille étagée (5) réglable le long de l'axe optique (HA) de la lampe à DEL, laquelle lentille reçoit la lumière émise par l'optique de mélange (4) et, grâce à la distribution de lumière réglable par l'intervalle de la lentille étagée (5) de l'optique de mélange (4) (Flood, Spot), émet dans une zone de champ lointain.

19. Lampe à DEL selon la revendication 18, **caractérisée en ce que** la lentille étagée (5) peut être réglée dans le tube (1) en direction de l'axe optique (HA) de la lampe à DEL.

20. Lampe à DEL selon au moins l'une des revendications 16 à 19, **caractérisée en ce que** l'optique de mélange (4) est agencée dans l'ouverture (104) d'une bride annulaire (103), dont le diamètre externe est égal au diamètre externe de la platine DEL (20) et/ou d'une plaque de forme en disque circulaire (101) reliée à la platine DEL (20), **en ce que** la bride annulaire (103) forme, d'une part, et la platine DEL (20) ou la plaque en forme de disque annulaire (101), d'autre part, l'avant d'une cartouche de forme cylindrique creuse (10), dont la chemise cylindrique (101) est reliée à la bride annulaire (103) et à la platine DEL (20) et/ou à la plaque en forme de disque circulaire (101), **en ce que** la cartouche (10) et la lentille étagée (5) sont agencées dans un tube (1) du boîtier de lampe ou de projecteur et **en ce que**
- la lentille étagée (5) et le tube (1) peuvent être réglés dans la direction de l'axe optique (HA) de la lampe à DEL ou
- la lentille étagée (5) et le tube (1) peuvent être déplacés dans la direction de l'axe optique (HA) de la lampe à DEL par rapport à la cartouche (10) ou
- la lentille étagée (5) est reliée au tube (1) et la cartouche (10) peut être déplacée vis-à-vis du tube (1) le long de l'axe optique (HA) de la lampe à DEL.

21. Lampe à DEL selon au moins l'une des revendications précédentes, **caractérisée en ce qu'**au moins une partie de la lumière émise par les DEL est guidée par un filtre couleur de sorte que le spectre de la lumière émise par le projecteur soit modifiée de manière déterminable, dans laquelle la combinaison de la caractéristique de rayonnement spectrale des DEL et la transmission spectrale du filtre couleur, en particulier un film de couleur, qui est optimisé au plan de la couleur par la lumière émise par le projecteur en sorte qu'ainsi, on obtienne un site chromatique souhaité et/ou un rendu de couleur souhaité pour une luminosité maximale.

22. Lampe à DEL selon au moins l'une des revendications précédentes, **caractérisée en ce que** la source de lumière active (2) présente plusieurs DEL (21 à 26) agencées du côté interne d'une surface incurvée (200) constituée d'une surface creuse en partie ou à moitié sphérique, d'une parabole creuse ou d'une surface creuse asphérique, lesquels DEL émettent de la lumière vers le centre de courbure ou le point de convergence de la surface incurvée (200) et **en ce qu'**il est prévu pour plusieurs ou la totalité des DEL (21 à 26) de la source de lumière active (2) la même optique de collimation (3).
